# EUROPEAN PATENT APPLICATION

(11) **EP 4 254 814 A1**
(43) Date of publication of application: **04.10.2023**
(21) Application number: 21905331.1
(22) Date of filing: 29.10.2021
(51) Int. Cl.: H04B 1/401, H04B 7/06

(54) **RADIO FREQUENCY PA MID DEVICE, RADIO FREQUENCY TRANSCEIVING SYSTEM, AND COMMUNICATION DEVICE**

(30) Priority: 16.12.2020 CN 202011489754
(71) Applicant: GUANGDONG OPPO MOBILE TELECOMMUNICATIONS CORP., LTD., Dongguan, Guangdong 523860 (CN)
(72) Inventor: WANG, Guolong, Dongguan, Guangdong 523860 (CN)
(74) Representative: Novagraaf Technologies
(86) International application number: PCT/CN2021/127545
(87) International publication number: WO 2022/127402

(57) **Abstract**

A radio frequency PA Mid device, provided with a transmitting port and multiple receiving ports which are configured to connect a radio frequency transceiver (30), and multiple antenna ports configured to connect antennas. The radio frequency PA MID device comprises: a first switch unit (100), comprising multiple first ends and at least one second end, and the second ends of the first switch unit (100) being respectively connected to the antenna ports in a one-to-one correspondence manner, multiple receiving circuits (200), the receiving circuits (200) comprising low-noise amplifiers (210), and an input end of the at least one low-noise amplifier (210) being connected to one first end of the first switch unit (100), the input ends of the remaining low-noise amplifiers (210) being respectively connected to the remaining antenna ports in a one-to-one correspondence manner, and the multiple receiving circuits (200) being configured to support multi-channel reception of radio frequency signals; and a transmitting circuit (300), an input end of the transmitting circuit (300) being connected to the transmitting port, an output end of the transmitting circuit (300) being connected to another first end of the first switch unit (100), and the transmitting circuit (300) being configured to receive the radio frequency signals and amplify the received radio frequency signals.

## Description

### CROSS REFERENCE TO RELATED APPLICATIONS

The present disclosure claims the priority of Chinese Patent Application No. 202011489754X, entitled "RADIO FREQUENCY PA MID DEVICE, RADIO FREQUENCY TRANSCEIVING SYSTEM, AND COMMUNICATION DEVICE", filed on December 16, 2020 in the National Intellectual Administration of China, the entire content of which is hereby incorporated by reference in its entirety.

### TECHNICAL FIELD

The present disclosure relates to a technical field of radio frequencies, and in particular to a radio frequency PA Mid device, a radio frequency transceiving system, and a communication device.

### BACKGROUND

Statements herein only provide background information related to the present disclosure and are not necessary to constitute exemplary technologies.

As technology is evolved and advanced, radio frequency Mid devices are evolved rapidly in response to growing increasing demand of various network standard. From initial Phase2 products only supporting a single frequency band to Phase7 products supporting an integration of various standard, devices intend to have smaller and smaller package sizes. Therefore, in order to achieve richer transceiving functions of radio frequency PA Mid devices as well as solve a problem of a tight PCB layout, an integration level and a miniaturization level of existing radio frequency PA Mid devices can no longer meet requirements of a development trend.

### SUMMARY OF THE DISCLOSURE

Various embodiments in accordance with the present disclosure provide a radio frequency PA Mid device, a radio frequency transceiving system, and a communication device.

A radio frequency PA Mid device, configured with a transmitting port; a plurality of receiving ports, the plurality of receiving ports and the transmitting port being configured to be connected to a radio frequency transceiver; and a plurality of antenna ports, configured to be connected to antennas; wherein the radio frequency PA Mid device includes: a first switching unit, including: a plurality of first terminals; and at least one second terminal, one-to-one connected to the plurality of antenna ports; a plurality of receiving circuits, including: a plurality of low noise amplifiers, wherein each of the plurality of receiving circuits comprises a low noise amplifier, an input terminal of at least one of the plurality of low noise amplifiers is connected to one of the plurality of first terminals of the first switching unit, input terminals of the rest of the plurality of low noise amplifiers are one-to-one connected to the rest of the plurality of antenna ports, respectively, and the plurality of receiving circuits is configured to support multi-channel reception for radio frequency signals; and a transmitting circuit, wherein an input terminal of the transmitting circuit is connected to the transmitting port, an output terminal of the transmitting circuit is connected to another one of the plurality of first terminals of the first switching unit, and the transmitting circuit is configured to receive a radio frequency signal and amplify a received radio frequency signal.

A radio frequency transceiving system, including: the radio frequency PA Mid device described above; a plurality of antennas, configured to receive and transmit the radio frequency signals; a second switching unit, wherein a plurality of first terminals of the second switching unit is one-to-one connected to the plurality of antenna ports, respectively, and a plurality of second terminals of the second switching unit is one-to-one connected to the plurality of antennas, respectively; and the radio frequency transceiver, connected to the transmitting port and the plurality of receiving ports of the radio frequency PA Mid device, respectively.

A radio frequency transceiving system, including: the radio frequency PA Mid device described above; a plurality of antennas, configured to receive and transmit the radio frequency signals, and configured to be one-to-one connected to the plurality of antenna ports of the radio frequency PA Mid device, respectively; and the radio frequency transceiver, connected to the transmitting port and the plurality of receiving ports of the radio frequency PA Mid device, respectively.

A radio frequency transceiving system, including: the radio frequency PA Mid device described above; a plurality of receiving modules, wherein each of the plurality of receiving modules is one-to-one connected to a corresponding one of the two antenna ports or a corresponding one of the two rotating transmitting ports of the radio frequency PA Mid device, respectively, and the plurality of receiving modules is configured to increase the number of receiving channels for the radio frequency signals; a plurality of antennas, configured to receive and transmit the radio frequency signals, wherein each of two of the plurality of antennas is one-to-one connected to the other one of the two antenna ports or the other one of the two rotating transmitting ports of the radio frequency PA Mid device, respectively, and the rest of plurality of antennas are one-to-one connected to the plurality of receiving modules, respectively; and the radio frequency transceiver, connected to the transmitting port and the plurality of receiving ports of the radio frequency PA Mid device, and the plurality of the receive modules.

A communication device, including the radio frequency PA Mid device described above.

Details of one or more embodiments of the present disclosure are provided in accompanying drawings and description below. Other features, purposes, and advantages of the present disclosure will become apparent through the description, the accompanying drawings, and the claims.

### BRIEF DESCRIPTION OF THE DRAWINGS

In order to more clearly illustrate technical solutions in embodiments of the present disclosure or exemplary techniques, the drawings used in description for the embodiments or the exemplary techniques will be briefly described below. Apparently, the drawings in the following description are only some embodiments of the present disclosure. Those skilled in the art may also obtain other drawings based on these drawings without paying any creative work.
FIG. 1 is a first structural block view of a radio frequency PA Mid device of dual receiving channels according to an embodiment of the present disclosure.
FIG. 2 is a first structural block view of a radio frequency PA Mid device of quad receiving channels according to an embodiment of the present disclosure.
FIG. 3 is a second structural block view of the radio frequency PA Mid device of the dual receiving channels according to an embodiment of the present disclosure.
FIG. 4 is a second structural block view of the radio frequency PA Mid device of the quad receiving channels according to an embodiment of the present disclosure.
FIG. 5 is a third structural block view of the radio frequency PA Mid device of the dual receiving channels according to an embodiment of the present disclosure.
FIG. 6 is a third structural block view of the radio frequency PA Mid device of the quad receiving channels according to an embodiment of the present disclosure.
FIG. 7 is a fourth structural block view of the radio frequency PA Mid device of the dual receiving channels according to an embodiment of the present disclosure.
FIG. 8 is a fourth structural block view of the radio frequency PA Mid device of the quad receiving channels according to an embodiment of the present disclosure.
FIG. 9 is a fifth structural block view of the radio frequency PA Mid device of the dual receiving channels according to an embodiment of the present disclosure.
FIG. 10 is a fifth structural block view of the radio frequency PA Mid device of the quad receiving channels according to an embodiment of the present disclosure.
FIG. 11 is a sixth structural block view of the radio frequency PA Mid device of the dual receiving channels according to an embodiment of the present disclosure.
FIG. 12 is a schematic view of a package structure of the radio frequency PA Mid device according to the embodiment depicted in FIG. 11.
FIG. 13 is a sixth structural block view of the radio frequency PA Mid device of the quad receiving channels according to an embodiment of the present disclosure.
FIG. 14 is a schematic view of a package structure of the radio frequency PA Mid device according to the embodiment depicted in FIG. 13.
FIG. 15 is a first structural block view of a radio frequency transceiving system according to an embodiment of the present disclosure.
FIG. 16 is a second structural block view of the radio frequency transceiving system according to an embodiment of the present disclosure.
FIG. 17 is a seventh structural block view of the radio frequency PA Mid device of the quad receiving channels according to an embodiment of the present disclosure.
FIG. 18 is a third structural block view of the radio frequency transceiving system according to an embodiment of the present disclosure.
FIG. 19 is an eighth structural block view of the radio frequency PA Mid device of the quad receiving channels according to an embodiment of the present disclosure.
FIG. 20 is a fourth structural block view of the radio frequency transceiving system according to an embodiment of the present disclosure.
FIG. 21 is a seventh structural block view of the radio frequency PA Mid device of the dual receiving channels according to an embodiment of the present disclosure.
FIG. 22 is a fifth structural block view of the radio frequency transceiving system according to an embodiment of the present disclosure.
FIG. 23 is an eighth structural block view of the radio frequency PA Mid device of the dual receiving channels according to an embodiment of the present disclosure.
FIG. 24 is a sixth structural block view of the radio frequency transceiving system according to an embodiment of the present disclosure.
FIG. 25 is a seventh structural block view of the radio frequency transceiving system according to an embodiment of the present disclosure.

### DETAILED DESCRIPTION

In order to understand the embodiments of the present disclosure, the embodiments of the present disclosure are described more fully below with reference to associated accompanying drawings. Preferred ones of the embodiments of the present disclosure are shown in the accompanying drawings. However, the embodiments of the present disclosure may be implemented in many different forms and are not limited to the embodiments described herein. Rather, these embodiments are provided for the purpose of making disclosed contents of embodiments of the present disclosure more thorough and comprehensive.

Unless otherwise defined, all technical and scientific terms used herein have the same meaning as commonly understood by those skilled in the technical field of the embodiments of the present disclosure. The terms used in the description of the embodiments of the present disclosure are only for a purpose of describing specific embodiments and are not intended to limit the embodiments of the present disclosure. The term "and/or" used herein includes any and all combinations of one or more of related listed items.

In addition, terms such as "first", "second", and the like, are used herein for purposes of description, and are not intended to indicate or imply relative importance or significance or to imply the number of indicated technical features. Thus, the feature defined with "first", "second", and the like may include one or more of such a feature. In the description of the present disclosure, it should be noted that, "a plurality of" means two or more, unless specified otherwise. In the description of the present disclosure, it should be noted that, "a plurality of" means two or more, such as two, three, etc., unless specified otherwise. In the description of the present disclosure, it should be noted that, "several" means at least one, such as one, two, etc., unless specified otherwise.

The radio frequency PA Mid device 10 involved in the embodiments of the present disclosure may be performed by a communication device with wireless communication capabilities. The communication device may be a handheld device, an invehicle device, a wearable device, a computing device, or other processing device connected to a wireless modem, and various forms of User Equipment (UE) (e.g., a cell phone), a mobile station (MS), or the like. For convenience of description, devices mentioned above are collectively referred to as communication devices. A network device may include a base station, or an access point, etc.

The radio frequency PA Mid device. The radio frequency PA Mid device can be understood to be a PA Mid module configured with a Low Noise Amplifier (Power Amplifier Modules including Duplexers With LNA). The radio frequency PA Mid device may support transmission and multi-channel reception for signals of a single frequency band, so as to achieve a control for a reception switch of the signal, a control for a transmission switch of the signal, and a control for switch between the reception and transmission of the signal. The radio frequency PA Mid device in the embodiments of the present disclosure embodiment may support controls of transmission and reception for the signal of one of frequency bands including N41, N77, and N79, etc.

The radio frequency PA Mid device may be understood to be a package structure. The radio frequency PA Mid device is configured with a transmitting port RFIN and a plurality of receiving ports, which are configured to be connected to a radio frequency transceiver, and a plurality of antenna ports ANT configured to be connected to antennas. The plurality of receiving ports may include a primary receiving port PRXOUT and a diversity receiving port DRXOUT in pairs. The PRXOUT and the DRXOUT may be configured to receive two different signals carrying the same information. A difference between the two different signals may include at least one of a transmission path, a frequency, time, and an integration mode, etc. The signals from such two receiving ports may be processed according to a preset rule, so as to obtain final received information. By a configuration manner described above, an accuracy of information transmission may be effectively improved, that is, a more reliable radio frequency PA Mid device is provided. The transmitting port RFIN, the receiving port PRXOUT/DRXOUT, and the antenna ports ANT may be understood to be radio frequency pin terminals of the radio frequency PA Mid device, which are configured to be connected to various external devices. In some embodiments of the present disclosure, the radio frequency PA Mid device includes at least two antenna ports ANTs.

The transmitting port RFIN is configured to receive multiple signals transmitted by the RF transceiver, the radio frequency PA Mid device may be configured to filter and amplify the multiple signals inputted therein and output processed multiple signals to a corresponding antenna port, and the processed multiple signals are transmitted by the antenna connected to the corresponding antenna port, such that the control of transmission for the multiple signals may be achieved. The antenna ports are also configured to receive signals received by the antennas. The radio frequency PA Mid device may be configured to filter and amplify the signals inputted by the antenna ports and output each of the processed signals to a corresponding receiving port DRXOUT or PRXOUT, and the processed signals are outputted to the radio frequency transceiver via the receiving ports, such that the control of reception for the multiple signals may be achieved.

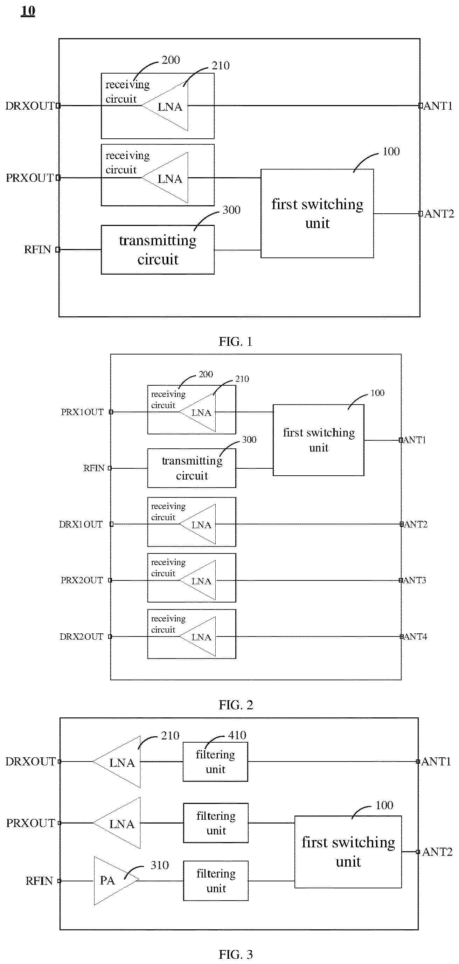

FIG. 1 is a first structural block view of a radio frequency PA Mid device 10 of dual receiving channels according to an embodiment of the present disclosure. As shown in FIG. 1, in this embodiment, the radio frequency PA Mid device 10 is configured with one transmitting port RFIN, two receiving ports, and two antenna ports. One of the two receiving ports is the primary receiving port PRXOUT, and the other one of the two receiving ports is the diversity receiving port DRXOUT. One of the two antenna ports is a first antenna port ANT1, and the other one of the two antenna ports is a second antenna port ANT2. The radio frequency PA Mid device 10 includes a first switching unit 100, a transmitting circuit 300, and a plurality of receive circuits 200. In the embodiment shown in FIG. 1, a case in which the radio frequency PAMid device 10 includes two receiving circuits 200 is illustrated as an example.

The first switching unit 100 includes a plurality of first terminals and at least one second terminal. The at least one second terminal of the first switching unit 100 is one-to-one connected to the plurality of antenna ports, respectively. In an embodiment, the first switching unit 100 includes two first terminals and one second terminal, one of the two first terminals of the first switching unit 100 is connected to one of the receiving circuits 200, the other one of the two first terminals is connected to the transmitting circuit 300, and the second terminal of the first switching unit 100 is connected to the second antenna port ANT2. It will be appreciated that in other embodiments, the first switching unit 100 may also be configured with other numbers of first terminals and other numbers of second terminals to enable the control of reception for different numbers of receiving circuits 200.

The first switching unit 100 may choose to output a radio frequency signal from the transmitting circuit 300 to the second antenna port ANT2, and may also choose to transmit a radio frequency signal from the second antenna port ANT2 to the receiving circuit 200 connected thereto. That is, the first switching unit 100 may choose to conduct a signal transmission path between the transmitting circuit 300 and the second antenna port ANT2, or may choose to conduct a signal transmission path between the receiving circuit 200 and the second antenna port ANT2, so as to support the control of transmission and the control of reception for different radio frequency signals.

As shown in FIG. 1, each of the receiving circuits 200 includes a low noise amplifier 210. The low noise amplifier 210 is configured to amplify a received radio frequency signal and transmit a processed signal to a corresponding receiving port. An input terminal of at least one low noise amplifiers 210 is connected to one of the first terminals of the first switching unit 100, input terminals of the rest of low noise amplifiers 210 are one-to-one connected to the rest of the plurality of antenna ports, respectively.

In this embodiment, one low noise amplifier 210 is configured to amplify a radio frequency signal received from the first antenna port ANT1, while the other low noise amplifier 210 is configured to amplify the radio frequency signal received from the second antenna port ANT2. In this way, two low noise amplifiers 210 may support amplification processes for radio frequency signals transmitted on two different channels. The amplification processes performed by the two low noise amplifiers 210 are independent from each other. That is, in this embodiment, the plurality of receiving circuits 200 is configured to support multi-channel reception for the radio frequency signals, so as to achieve or implement a radio frequency PA Mid device 10 of multiple receiving channels.

An input terminal of the transmitting circuit 300 is connected to the transmitting port RFIN, an output terminal of the transmitting circuit 300 is connected to the other one of the first terminals of the first switching unit 100. The transmitting circuit 300 is configured to receive the radio frequency signal and amplify a received radio frequency signal, and transmit an amplified signal to the corresponding antenna port via the first switching unit 100, so as to achieve the transmission for the radio frequency signal. In an embodiment, the transmitting circuit 300 may include a power amplifier configured to amplify the received Radio frequency signal. A magnification of the power amplifier may be set according to a requirement of a transmitting power of the radio frequency PA Mid device 10.

In this embodiment, by integrating the first switching unit 100, the transmitting circuit 300, and the plurality of receiving circuits 200 in the same device, both the control of the transmission for the radio frequency signal and the control of the reception for the radio frequency signals of multiple channels may be achieved through a switching function of the first switching unit 100. In addition, through the transmitting circuit 300 and the at least one receiving circuit 200 sharing the same antenna port, the number of the antenna ports are reduced. The functions of transmission and multi-channel reception may be achieved without a support of an external hardware structure such as a LFEM device (low noise amplifier front end module), a switch, etc. Thus, this embodiment provides the radio frequency PA Mid device 10 having a high integration level and a low requirement for the external hardware structure.

It can be further understood that in the related art, the radio frequency PA Mid device 10 is required to cooperate with LFEM devices during operation, while each external LFEM device requires to approximately occupy an area of 12 mm². Moreover, additional configuration for a power supply and a logic control module is further required to achieve functions of the LFEM device. However, when multiple additional-configured modules are connected to the radio frequency PA Mid device 10 via a PCB (Printed Circuit Board), the number of wirings on the PCB may be caused to be unduly large. As a result, the PCB may have an excessively compact wiring, which in turn increases wiring difficulty and the number of wiring layers, such that a manufacture cost of an entire radio frequency transceiving system may be improved. In this embodiment, the number of and a density of the wirings may be effectively reduced through the radio frequency PAMid device 10 with a higher integration level, and the complexity of an assembly process of a RF transceiving system may be thereby reduced. In this way, an overall cost of the RF transceiving system in which the RF PA Mid device 10 in this embodiment is implemented may be further reduced.

It should be noted that the number of the receiving circuits 200 in the embodiments of the present disclosure is not limited to two as shown in FIG. 1. In order to achieve a greater throughput, a greater number of receiving circuits 200 may be provided in the radio frequency PA Mid device 10, such as four, eight, etc., so as to form more receiving channels for the radio frequency signals in the radio frequency PA Mid device 10. In each of the embodiments of the present disclosure, the radio frequency PA Mid device 10 configured with two or four receiving circuits 200 is emphasized to illustrate as an example. The radio frequency PA Mid device 10 configured with other numbers of receiving circuits 200 has a structure similar to that of the radio frequency PA Mid device 10 provided in the description, which may refer to configuration of the latter and is not repeated herein.

FIG. 2 is a first structural block view of a radio frequency PA Mid device 10 of quad receiving channels according to an embodiment of the present disclosure. As shown in FIG. 2, in this embodiment, the radio frequency PA Mid device 10 is configured with one transmitting port RFIN, four receiving ports, and four antenna ports. The four receiving ports are a first primary receiving port PRX1OUT, a first diversity receiving port DRX1OUT, a second primary receiving port PRX2OUT, and a second diversity receiving port DRX2OUT, respectively. The four antenna ports are the first antenna port ANT1, the second antenna port ANT2, a third antenna port ANT3, and a fourth antenna port ANT4, respectively. The radio frequency PA Mid device 10 includes the first switching unit 100, the transmitting circuit 300, and four receive circuits 200.

The first switching unit 100 includes two first terminals and one second terminal. One of the two first terminals of the first switching unit 100 is connected to one of the receiving circuits 200, the other one of the two first terminals of the first switching unit 100 is connected to the transmitting circuit 300, and the second terminal of the first switching unit 100 is connected to the first antenna port ANT1. It will be appreciated that, in other embodiments, the first switching unit 100 may also be configured with other numbers of first terminals and other numbers of second terminals, to enable the control of the reception for the different numbers of receiving circuits 200.

The first switching unit 100 may choose to output the radio frequency signal from the transmitting circuit 300 to the first antenna port ANT1, and may also choose to transmit the radio frequency signal from the first antenna port ANT1 to the receiving circuit 200 connected thereto. That is, the first switching unit 100 may choose to conduct the signal transmission path between the transmitting circuit 300 and the first antenna port ANT1, or choose to conduct the signal transmission path between the receiving circuit 200 and the first antenna port ANT1, so as to support the control of the transmission and the control of the reception for the different radio frequency signals.

Each of the receiving circuits 200 includes the low noise amplifier 210. The low noise amplifier 210 is configured to amplify the received radio frequency signal and transmit the processed signal to the corresponding receiving port. The input terminal of one of the low noise amplifiers 210 is connected to the one of the first terminals of the first switching unit 100, and an output terminal of this low noise amplifier 210 is connected to the first primary receiving port PRX1OUT. The input terminals of the rest three of the low noise amplifiers 210 are one-to-one connected to the rest of the antenna ports, i.e., the second antenna port ANT2, the third antenna port ANT3, and the fourth antenna port ANT4, respectively. Output terminals of the rest three of the low noise amplifiers 210 mentioned above are one-to-one connected to the first diversity receiving port DRX 1 OUT, the second primary receiving port PRX2OUT, and the second diversity receiving port DRX2OUT, respectively.

The input terminal of the transmitting circuit 300 is connected to the transmitting port RFIN, and the output terminal of the transmitting circuit 300 is connected to the other one of the first terminals of the first switching unit 100. The transmitting circuit 300 is configured to receive the radio frequency signal and amplify the received radio frequency signal, and then transmit the amplified signal to the corresponding antenna port via the first switching unit 100, so as to achieve the transmission of the radio frequency signal.

In this embodiment, one of the low noise amplifiers 210 is configured to amplify the radio frequency signal received from the first antenna port ANT1, and the rest three of the low noise amplifiers 210 are configured to amplify the radio frequency signals received from corresponding antenna ports, respectively. Thus, four low noise amplifiers 210 may support the amplification processes for the radio frequency signals transmitted on four different channels. The amplification processes performed by the four low noise amplifiers 210 are independent from each other. That is, in this embodiment, the plurality of receiving circuits 200 is configured to support quad-channel reception for the radio frequency signals, so as to achieve or implement a radio frequency PA Mid device 10 with a single transmitting channel and quad transmitting channels.

FIG. 3 is a second structural block view of the radio frequency PA Mid device 10 of the dual receiving channels according to an embodiment of the present disclosure. As shown in FIG. 3, in this embodiment, the radio frequency PA Mid device 10 includes the first switching unit 100, a power amplifier 310, and a plurality of low noise amplifiers 210. The above structure may be referred to the embodiment depicted in accordance with FIG. 1, which will not be repeated herein. The radio frequency PA Mid device 10 in this embodiment also includes a plurality of filtering units 410.

The plurality of filter unit 410 one-to-one corresponds to the plurality of low noise amplifiers 210, and each of the plurality of filtering units 410 is arranged on a receiving channel of a corresponding one of the plurality of the low noise amplifiers 210. In this embodiment, two low noise amplifiers 210 are configured therein, and the receiving channel of each of the two low noise amplifiers 210 is provided with one filtering unit 410. The receiving channel of the low noise amplifier 210 indicates the signal transmission path between the antenna port and a corresponding receiving port. For example, the first antenna port ANT1, the low noise amplifier 210, and the diversity receiving port DRXOUT together constitute one receiving channel, and the second antenna port ANT2, a second switching unit 20, the low noise amplifier 210, and the primary receiving port PRXOUT together constitute another receiving channel. The filtering units 410 are arranged on the receiving channels described above for receiving the radio frequency signals from the antenna ports and filtering the received radio frequency signals. In an embodiment, the plurality of filtering units 410 may be arranged between the input terminals of the plurality of low noise amplifiers 210 and the antenna ports.

Each of the plurality of filtering units 410 may include a filter, and the filter only allows a radio frequency signal in a predetermined frequency band to pass. The filter may be a band-pass filter, a low-pass filter, or the like. It should be noted that, in some embodiments of the present disclosure, the type of the filter in each of the plurality of filtering unit 410 is not further limited, and a frequency band of a to-be-filtered radio frequency signal may serve as a basis for choose a proper filter. Moreover, in this embodiment, a specific location of each of the plurality of filtering unit 410 is not further limited. That is, for the receiving channel configured with the first switching unit 100, the filtering unit 410 thereon may be arranged between the low noise amplifier 210 and the first switching unit 100, or arranged between the first switching unit 100 and the second antenna port ANT2.

As shown in FIG. 3, in an embodiment, a transmitting channel of the power amplifier 310 is also provided with one filtering unit 410, and the power amplifier 310 in the transmitting circuit 300 is connected to the first terminal of the first switching unit 100 via this filtering unit 410. The transmitting channel of the power amplifier 310 indicates a signal transmission path between the transmitting port RFIN and a corresponding antenna port. For example, the transmitting port RFIN, the power amplifier 310, the first switching unit 100, and the second antenna port ANT2 together constitute one transmitting channel. This filtering unit 410 is arranged on the transmitting channel for receiving the radio frequency signal from the transmitting port RFIN and filtering the received radio frequency signal. In an embodiment, the filtering unit 410 is arranged on the signal transmission path between an output terminal of the power amplifier 310 and the corresponding antenna port.

Similar to the filtering units 410 connected to the low noise amplifiers 210 described above, the filtering unit 410 connected to the power amplifier 310 may include one filter, and the filter only allows the radio frequency signal in the predetermined frequency band to pass. The filter may be the band-pass filter, the low-pass filter, etc. It should be noted that, in some embodiments of the present disclosure, the type of the filter in each of the filtering units 410 is not further limited, and the frequency band of the to-be-filtered radio frequency signal may serve as the basis for choose the proper filter. Moreover, in this embodiment, the specific location of each of the filtering units 410 is also not further limited. That is, for the transmitting channel configured with the first switching unit 100, the filtering unit 410 thereon may be arranged between the power amplifier 310 and the first switching unit 100, or arranged between the first switching unit 100 and the second antenna port ANT2. Further, for the radio frequency PA Mid device 10 with the same transmitting frequency band and receiving frequency band, the transmitting channel may be provided with the filter having the same parameter and performance as the receiving channel, and a required filtering function may be achieved. In this way, difficulties of designing and manufacturing the radio frequency PA Mid device 10 may be reduced.

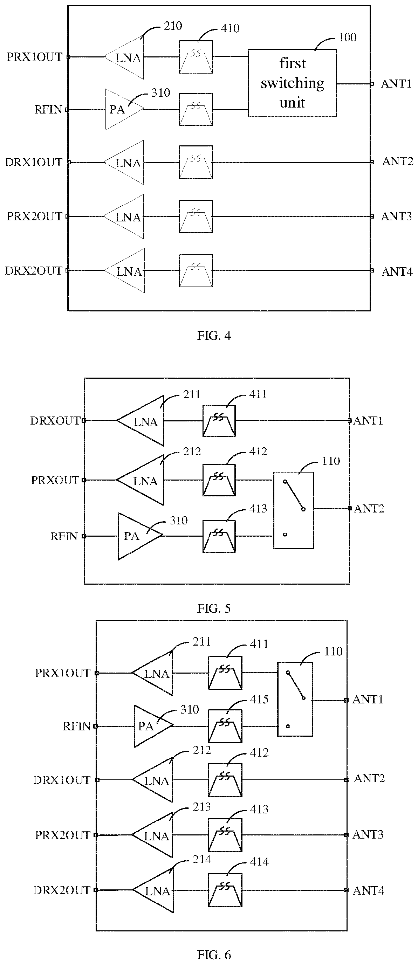

FIG. 4 is a second structural block view of the radio frequency PA Mid device 10 of the quad receiving channels according to an embodiment of the present disclosure. As shown in FIG .4, in this embodiment, the radio frequency PA Mid device 10 includes the first switching unit 100, the power amplifier 310, and four low noise amplifiers 210. The above structure may be referred to the embodiment depicted in accordance with FIG. 2, which will not be repeated herein. The radio frequency PA Mid device 10 in this embodiment also includes the plurality of filtering units 410.

Four filtering units 410 one-to-one correspond to the four low noise amplifiers 210. Each of the four filtering units 410 is arranged on the receiving channel of a corresponding one of the four low noise amplifiers 210. Exemplarily, the first antenna port ANT1, the first switching unit 100, one of the four low noise amplifiers 210, and the first primary receiving port PRX1OUT may together constitute one receiving channel, and the second antenna port ANT2, another one of the four low noise amplifiers 210, and the first diversity receiving port DRX1OUT may together constitute another receiving channel. The filtering units 410 are arranged on the receiving channels mentioned above and configured to receive the radio frequency signals from the antenna ports and filter the received radio frequency signals. In an embodiment, the filtering unit 410 may be arranged on the signal transmission path between an input terminal of the power amplifier 310 and the corresponding antenna port.

FIG. 5 is a third structural block view of the radio frequency PA Mid device 10 of the dual receiving channels according to an embodiment of the present disclosure. As shown in FIG. 5, in this embodiment, the first switching unit 100 includes two first terminals and one second terminal. That is, the first switching unit 100 is an SPDT switch 110. First terminals of the plurality of filtering units 410 are one-to-one connected to input terminals of the plurality of low noise amplifiers, respectively. One of the two first terminals of the first switching unit 110 is one-to-one connected to the output terminal of the transmitting circuit 310, the other one of the two first terminals of the first switching unit is one-to-one connected to a second terminal of one of the plurality of filtering units 410, respectively, and the second terminal of the first switching unit 110 is connected to one of the plurality of antenna ports. The rest of the plurality of filtering units are one-to-one connected to the rest of the plurality of antenna ports, respectively. In this way, the radio frequency PA Mid device 10 with the single transmitting channel and multiple receiving channels may be formed therein. Further, the radio frequency PA Mid device 10 may further include a filtering unit corresponding to the transmitting circuit 300. The transmitting circuit 300 is connected to the one of the two first terminals of the first switching unit 110 via this filtering unit 410. In this embodiment, the transmitting circuit 300 is the power amplifier.

In an embodiment, one of the first terminals of the SPDT switch 110 is connected to an input terminal of a second low noise amplifier 212 via a second filter 412, the other one of the first terminals of the SPDT switch 110 is connected to the output terminal of the power amplifier 310 via a third filter 413, and the second terminal of the SPDT switch 110 is connected to the second antenna port ANT2. In addition, a first filter 411 is connected to the first antenna port ANT1, and an input terminal of a first low noise amplifier 211 is connected to the first filter 411. An output terminal of the first low noise amplifier 211 is connected to the diversity receiving port DRXOUT, an output terminal of the second low noise amplifier 212 is connected to the primary receiving port PRXOUT, and the input terminal of the power amplifier 310 is connected to the transmitting port RFIN. In this embodiment, with the configuration of the SPDT switch 110, one of the low noise amplifiers 210 and the power amplifier 310 are connected to the same antenna port, such that the second low noise amplifier 212 and the power amplifier 310 may time-alternatively receive and transmit the radio frequency signal through the second antenna port ANT2, based on a switching function of the SPDT switch 110. In this way, the radio frequency PA Mid device 10 with the signal transmitting channel and the dual receiving channels may be achieved.

FIG. 6 is a third structural block view of the radio frequency PA Mid device 10 of the quad receiving channels according to an embodiment of the present disclosure. As shown in FIG. 6, in this embodiment, the first switching unit 100 includes two first terminals and one second terminal. That is, the first switching unit 100 is the SPDT switch 110. Exemplarily, a case where for the signal receiving channel and the signal transmitting channel configured with the SPDT switch 110, the filtering units 410 are arranged between the low noise amplifier 210 and the SPDT switch 110 and between the power amplifier 310 and the SPDT switch 110, respectively, is taken as an example for illustrating this embodiment.

In an embodiment, one of the first terminals of the SPDT switch 110 is connected to the input terminal of the first low noise amplifier 211 via the first filter 411, the other one of the first terminals of the SPDT switch 110 is connected to the output terminal of the power amplifier 310 via a fifth filter 415, and the second terminal of the SPDT switch 110 is connected to the first antenna port ANT1. In addition, the output terminal of the first low noise amplifier 211 is connected to the first primary receiving port PRX1OUT, and the input terminal of the power amplifier 310 is connected to the transmitting port RFIN. The second filter 412 is connected to the second antenna port ANT2. The input terminal of the second low noise amplifier 212 is connected to the second filter 412, and the output terminal of the second low noise amplifier 212 is connected to the first diversity receiving port DRX1OUT. A connecting relationship of each of the third filter 413 and a fourth filter 414 is similar to that of the second filter 402, and a relationship of each of a third low noise amplifier 213 and a fourth low noise amplifier 214 is similar to that of the second low noise amplifier 212, which are not repeated herein. In this embodiment, with the configuration of the SPDT switch 110, one of the low noise amplifiers 210 and the power amplifier 310 are connected to the same antenna port, such that the first low noise amplifier 211 and the power amplifier 310 may time-alternatively receive and transmit the radio frequency signal through the first antenna port ANT1, based on the switching function of the SPDT switch 110. In this way, the radio frequency PA Mid device 10 with the signal transmitting channel and the quad receiving channels may be achieved.

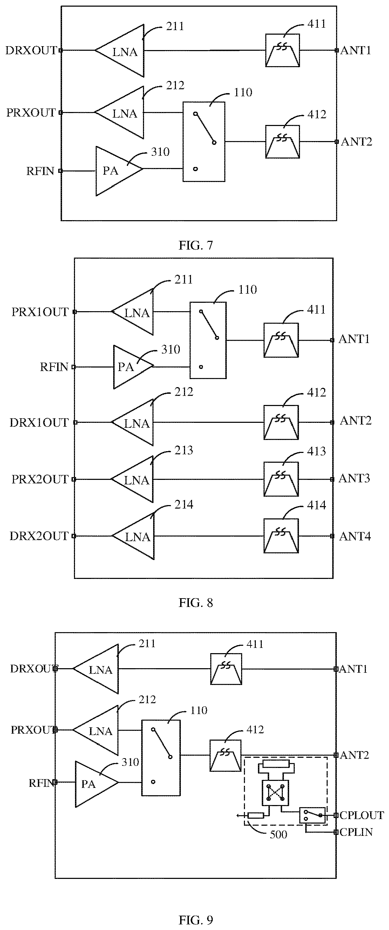

FIG. 7 is a fourth structural block view of the radio frequency PA Mid device of the dual receiving channels according to an embodiment of the present disclosure. As shown in FIG. 7, the same as the embodiment depicted in accordance with FIG. 5, the first switching unit 100 in this embodiment is also the SPDT switch 110, while in this embodiment, on the signal receiving channel and the signal transmitting channel configured with the SPDT switch 110, the filtering unit 410 is arranged between the corresponding low noise amplifier 210 and the SPDT switch 110.

In an embodiment, one of the first terminals of the SPDT switch 110 is connected to the input terminal of the second low noise amplifier 212, the other one of the first terminals of the SPDT switch 110 is connected to the output terminal of the power amplifier 310, and the second terminal of the SPDT switch 110 is connected to the second antenna port ANT2 via the second filter 412. In addition, the first filter 411 is connected to the first antenna port ANT 1, and the input terminal of the first low noise amplifier 211 is connected to the first filter 411. The output terminal of the first low noise amplifier 211 is connected to the diversity receiving port DRXOUT, and the input terminal of the power amplifier 310 is connected to the transmitting port RFIN. The output terminal of the second low noise amplifier 212 is connected to the primary receiving port PRXOUT. Combining FIG. 5 and FIG. 7, it can be appreciated that, in this embodiment, through arranging the second filter 412 between the SPDT switch 110 and the second antenna port ANT2, the second low noise amplifier 212 and the power amplifier 310 may share the second filter 412. Furthermore, based on the radio frequency PA Mid device 10 having the same receiving wave band and transmitting wave band, a wave-filtering function for the radio frequency signal is not affected by sharing the same filter. In this way, one filter may be reduced, and thereby a volume of the radio frequency PA Mid device 10 is further reduced.

FIG. 8 is a fourth structural block view of the radio frequency PA Mid device 10 of the quad receiving channels according to an embodiment of the present disclosure. As shown in FIG. 8, the same as the embodiment depicted in accordance with FIG. 6, the first switching unit 100 in this embodiment is also the SPDT switch 110, while in this embodiment, on the signal receiving channel and the signal transmitting channel configured with the SPDT switch 110, the filtering unit 410 is arranged between the corresponding low noise amplifier 210 and the SPDT switch 110.

In an embodiment, one of the first terminals of the SPDT switch 110 is connected to the input terminal of the first low noise amplifier 211, the other one of the first terminals of the SPDT switch 110 is connected to the output terminal of the power amplifier 310, and the second terminal of the SPDT switch 110 is connected to the first antenna port ANT1 via the first filter 411. In addition, the output terminal of the first low noise amplifier 211 is connected to the first primary receiving port PRX1OUT, and the input terminal of the power amplifier 310 is connected to the transmitting port RFIN. The second filter 412 is connected to the second antenna port ANT2. The input terminal of the second low noise amplifier 212 is connected to the second filter 412, and the output terminal of the second low noise amplifier 212 is connected to the first diversity receiving port DRX1OUT. The connecting relationship of each of the third filter 413 and the fourth filter 414 is similar to that of the second filter 402, and the relationship of each of the third low noise amplifier 213 and the fourth low noise amplifier 214 is similar to that of the second low noise amplifier 212, which are not repeated herein. Combining FIG. 6 and FIG. 8, it can be appreciated that, in this embodiment, through arranging the first filter 411 between the SPDT switch 110 and the first antenna port ANT1, the first low noise amplifier 211 and the power amplifier 310 may share the first filter 411. Furthermore, based on the radio frequency PA Mid device 10 having the same receiving wave band and transmitting wave band, the wave-filtering function for the radio frequency signal is not affected by sharing the same filter. In this way, one filter may be reduced, and thereby the volume of the radio frequency PA Mid device 10 is further reduced.

FIG. 9 is a fifth structural block view of the radio frequency PA Mid device 10 of the dual receiving channels according to an embodiment of the present disclosure. As shown in FIG. 9, in this embodiment, the radio frequency PA Mid device 10 is further configured with a coupling output port CPLOUT. The radio frequency PA Mid device 10 further includes a coupling circuit 500. The coupling circuit 500 is arranged on a transmitting channel between the transmitting port RFIN and a corresponding antenna port, and configured to couple the radio frequency signal transmitted on the transmitting channel, to enable a coupling signal to be outputted by a coupling terminal of the coupling circuit 500. The coupling signal is configured to be transmitted to the coupling output port CPLOUT.

In an embodiment, in this embodiment, the coupling circuit 500 is arranged between the second filter 412 and the second antenna port ANT2, i.e., arranged on the transmitting channel of the radio frequency PA Mid device 10. The coupling signal may be configured to measure a forward coupling power and a reverse coupling power of the radio frequency signal. The coupling circuit 500 includes an input terminal, an output terminal, and the coupling terminal. The input terminal of the coupling circuit 500 is connected to the second filter 412, the output terminal of the coupling circuit 500 is connected to the second antenna port ANT2, and the coupling terminal is configured to couple the radio frequency signal received at the input terminal of the coupling circuit 500 and output the coupling signal. The coupling signal includes a first forward coupling signal and a first reverse coupling signal. Based on the first forward coupling signal outputted by the coupling terminal, the radio frequency signal or forward power information of the radio frequency signal may be detected. Based on the first reverse coupling signal outputted by the coupling terminal, the radio frequency signal or reverse power information of the radio frequency signal may be detected correspondingly, and a detection mode is defined to be a reverse power detection mode.

Moreover, the coupling circuit 500 is provided with a coupling switch. The coupling switch is connected to the coupling terminal of the coupling circuit 500, the coupling input port CPLIN, and the coupling output port CLPOUT, respectively. The coupling switch is configured to alternatively output the coupling signal to the coupling output port or input coupling signals of other coupling circuits 500 from the coupling input port CPLIN. It may be understood that when a radio frequency transceiving system is configured with multiple radio frequency PA Mid devices 10, distances among the multiple radio frequency PA Mid devices 10 are usually small, while distances between the multiple radio frequency PA Mid devices 10 and a radio frequency transceiver 30 is great. Thus, one coupling circuit 500 may be configured to acquire a coupling signal of another coupling circuit 500 and to transmit this coupling signal. That is, a transit of the radio frequency signal may be achieved through the coupling circuit 500, such that the number of the wirings between the coupling circuit 500 and the radio frequency transceiver 30 may be reduced. In this way, the same transmission function of the coupling signal may be achieved with a smaller number of wirings, and the integration level of the radio frequency transceiving system may be further improved.

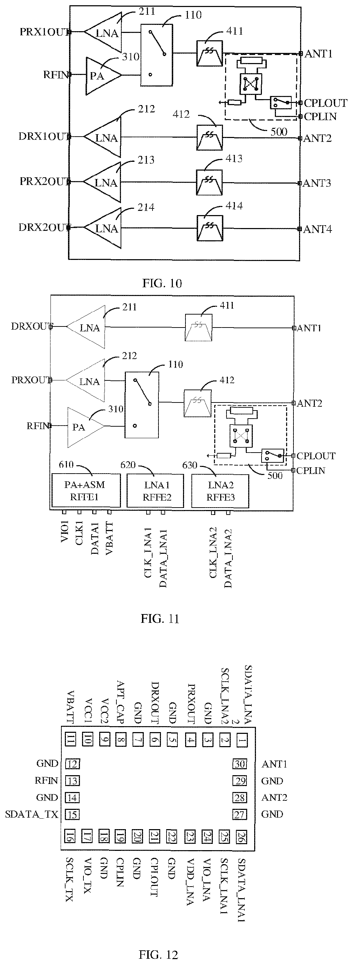

FIG. 10 is a fifth structural block view of the radio frequency PA Mid device of the quad receiving channels according to an embodiment of the present disclosure. As shown in FIG. 10, in this embodiment, the radio frequency PA Mid device 10 is further configured with the coupling output port CPLOUT. The radio frequency PA Mid device 10 further includes the coupling circuit 500. The coupling circuit 500 is arranged on the transmitting channel between the transmitting port RFIN and the corresponding the antenna port, and configured to couple the radio frequency signal transmitted on the transmitting channel, to enable the coupling signal to be outputted by the coupling terminal of the coupling circuit 500. The coupling signal is configured to be transmitted to the coupling output port CPLOUT. In an embodiment, the coupling circuit 500 is arranged between the first filter 411 and the first antenna port ANT1, i.e., arranged on the transmitting channel of the radio frequency PA Mid device 10. It will be understood that an internal structure and a coupling manner of the radio frequency PA Mid device 10 in this embodiment is similar to those of the radio frequency PA Mid device 10 in the embodiment depicted in accordance with FIG. 9, which are not repeated herein.

FIG. 11 is a sixth structural block view of the radio frequency PA Mid device 10 of the dual receiving channels according to an embodiment of the present disclosure. As shown in FIG. 11, in this embodiment, the radio frequency PAMid device 10 further includes a first control unit 610, i.e., a control unit PA+ASM RFFE1 shown in FIG. 11. The first control unit 610 is connected to each of switching units and the power amplifier 310, respectively. The switching units include, for example, the SPDT switch 110. The first control unit 610 is configured to control each of the switching units to be on/off and an operating state of the power amplifier 310. In an embodiment, the first control unit 610 may be a Mobile Industry Processor Interface (MIPI)-radio frequency (RF) Front End Control Interface (RFFE) control unit. When the first control unit 610 is the MIPI-RFFE control unit, the RF PA Mid device 10 is further configured with an input pin CLK for a clock signal, an input pin or a bi-directional pin DATA1 for a single/bi-directional data signal, and a reference voltage pin VIO, or the like.

As shown in FIG. 11, in an embodiment, the RF PA Mid device 10 further includes a second control unit 620, i.e., a control unit LNA1 RFFE2. The second control unit 620 is connected to the low noise amplifiers 210. The low noise amplifiers 210 includes, for example, the first low noise amplifier 211 and the second low noise amplifier 212. The second control unit 620 is configured to adjust a gain coefficient of each of the low noise amplifiers 210 to reduce a cascading noise coefficient of the receiving channel for the RF signal, such that a sensitivity level of the RF PA Mid device 10 may be improved. The type of the second control unit 620 may be the MIPI-RFFE control unit, which conforms to a control protocol of a RFFE bus. When the second control unit 620 is the MIPI-RFFE control unit, the RF PA Mid device 10 is also configured with the input pin CLK_LNA1 for the clock signal and the input pin or the bi-directional pin DATA_ LNA1 for the single/bi-directional data signal.

Further, the RF PA Mid device 10 may also include a third control unit 630, i.e., a control unit LNA2 RFFE3. The third control unit 630 is connected to the low noise amplifiers 210. The third control unit 630 and the second control unit 620 may be connected to different low noise amplifiers 210 to control the different low noise amplifiers 210. The type of the third control unit 630 may be the MIPI-RFFE control unit, which conforms to the control protocol of the RFFE bus. When the third control unit 630 is the MIPI-RFFE control unit, the RF PA Mid device 10 is also configured with the input pin CLK_LNA2 for the clock signal and the input pin or the bi-directional pin DATA_ LNA2 for the single/bi-directional data signal.

In an embodiment, each component of the RF PA Mid device 10 shown in FIG. 11 may be integrated and packaged in the same package module. FIG. 12 is a schematic view of a package structure of the RF PA Mid device according to the embodiment depicted in FIG. 11. As shown in FIG. 12, pins of the RF PA Mid device 10 (a package chip) one-to-one correspond to a plurality of ports configured in the RF PA Mid device 10.

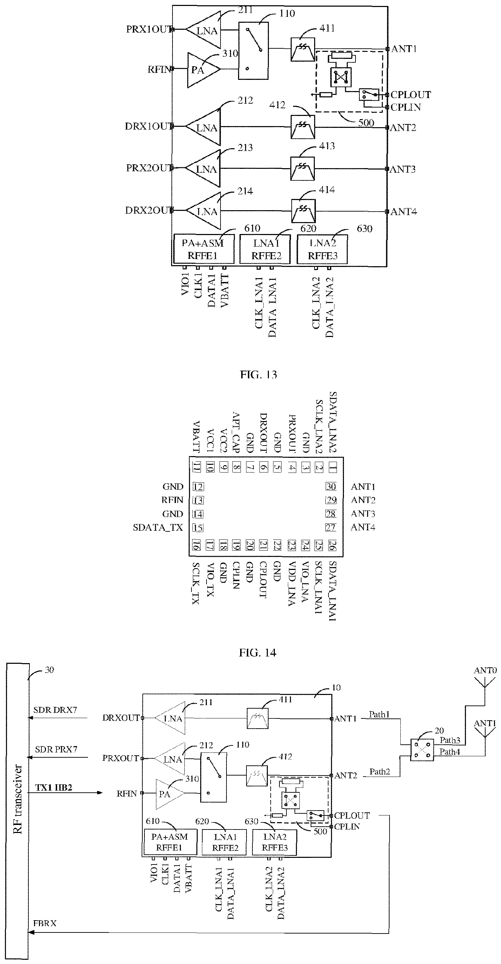

FIG. 13 is a sixth structural block view of the RF PA Mid device of the quad receiving channels according to an embodiment of the present disclosure. As shown in FIG. 13, similar to the embodiment depicted in accordance with FIG. 11, in this embodiment, the RF PA Mid device 10 may also include at least one of the first control unit 610, the second control unit 620, and the third control unit 630. A connection relationship and a control manner of each control unit are similar to those in the embodiment depicted in accordance with FIG. 11, which thereby are not repeated in this embodiment. Through arranging the first control unit 610 described above in the RF PA Mid device 10, the operating state of each power amplifier 310 may be controlled. Through arranging the second control unit 620 and/or the third control unit 630 in the RF PA Mid device 10, the cascading noise coefficient of the receiving channel for the RF signal may be reduced, such that the sensitivity level of the RF PA Mid device 10 may be improved.

In an embodiment, since each component of the RF PA Mid device 10 shown in FIG. 13 may be integrated and packaged in the same package module. FIG. 14 is a schematic view of a package structure of the RF PA Mid device according to the embodiment depicted in FIG. 13. As shown in FIG. 12a, the pins of the RF PA Mid device 10 (the package chip) one-to-one correspond to the plurality of ports configured in the RF PA Mid device 10.

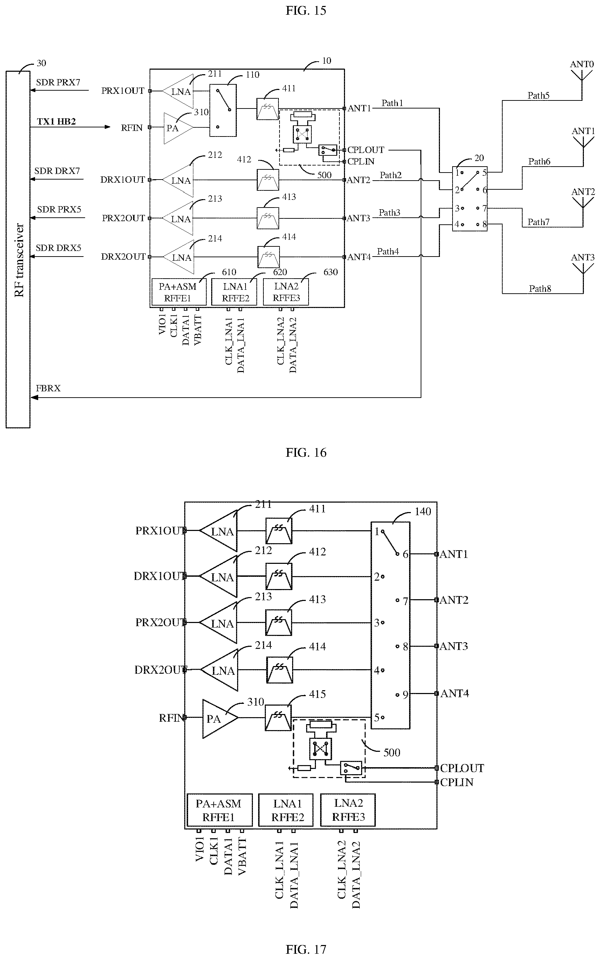

Based on multiple RF PA Mid devices 10 of the dual receiving channels shown in FIGS. 1, 3, 5, 7, 9, and 11, a RF transceiving system is also provided in some embodiments of the present disclosure. FIG. 15 is a first structural block view of the RF transceiving system according to an embodiment of the present disclosure. As shown in FIG. 15, the RF transceiving system includes the RF PA Mid device 10 described above, a second switching unit 20, a RF transceiver 30, and a plurality of antennas.

The plurality of antennas is configured to receive and transmit the RF signals. In the embodiment shown in FIG. 15, the RF transceiving system includes two antennas, i.e., a first antenna ANT0 and a second antenna ANT1, respectively. Each of the plurality of antennas may be a directional antenna or a non-directional antenna. Exemplarily, each of the plurality of antennas may be formed by any suitable type of antenna. For example, each of the plurality of antennas may include an antenna having a resonant element consisting of at least one of the following antenna structures: an array antenna, a loop antenna, a patch antenna, a slit antenna, a spiral antenna, a ribbon antenna, a monopole antenna, and a dipole antenna, or the like.

A plurality of first terminals of the second switching unit 20 is one-to-one connected to the plurality of antenna ports, respectively, and a plurality of second terminals of the second switching unit 20 is one-to-one connected to the plurality of antennas, respectively. In an embodiment, by controlling a switching state of the second switching unit 20, the receiving channel and a transmission path of a transmitting signal on which each of the first antenna ANT0 and the second antenna ANT1 is arranged may be controlled to be conducted, respectively.

The RF transceiver 30, is connected to the transmitting port RFIN and the plurality of the receiving ports of the RF PA Mid device 10.

Based on the RF transceiving system as shown in FIG. 15, an operating principle of the RF transceiving system is analyzed in detail.

Control for SRS rotating transmitting: Table 1 shows a detailed SRS path configuration of the RF PA Mid device 10 in this embodiment. Combined with Table 1, the transmitting signal is outputted from a port TX1 HB2 of the RF transceiver 30, enters into the RF PA Mid device 10 through the RFIN port, and is transmitted to the SPDT switch 110 after being amplified by the power amplifier 310. The SPDT switch 110 switches to a single port, the transmitting signal passes through a filter to be transmitted to the second antenna port ANT2 of the RF PA Mid device 10, and passes through a Path2 to the second switching unit 20. The second switching unit 20 switches to a Path3, the transmitting signal is thereby transmitted to and outputted by the first antenna ANT0, and an SRS function is achieved. The SPDT switch 110 switches to a Path4, the transmitting signal is thereby transmitted to and outputted by the second antenna ANT1, and the SRS function is achieved.

**Table 1 detailed SRS path configuration table**

| | |
|---|---|
| Channel0 | Path2->Path3 |
| Channel1 | Path2->Path4 |

Control for transmission: the transmitting signal is outputted from the port TX1 HB2 of the RF transceiver 30, enters into the RF PA Mid device 10 through the RFIN port, and is transmitted to the SPDT switch 110 after being amplified by the power amplifier 310. The SPDT switch 110 switches to the single port, the transmitting signal is transmitted to the third antenna port ANT3 of the RF PA Mid device 10 through the filter, and passes through the Path2 to a single port of the second switching unit 20. The second switching unit 20 switches to the Path3, and the transmitting signal is eventually transmitted to and outputted by the first antenna ANT0.

Control for primary reception: a receiving signal enters from the first antenna ANT0, and passes through the Path3 to the second switching unit 20. A DPDT switch of the second switching unit 20 switches to the Path2, the receiving signal is thereby transmitted to the second antenna port ANT2 of the RF PA Mid device 10, and passes through the filter to the SPDT switch 110. The SPDT switch 110 switches to a PRX path, the receiving signal is transmitted to the PRXOUT port after being amplified by the second low noise amplifier 212, and passes through a port SDR PRX7 into the RF transceiver 30.

Control for diversity reception: the receiving signal enters from the second antenna ANT1, and passes through the Path4 to the first antenna port ANT1 of the RF PA Mid device 10, passes through a filter and is transmitted to the DRXOUT port the after being amplified by the first low noise amplifier 211, and passes through the port SDR DRX7 into the RF transceiver 30.

The RF transceiving system in this embodiment includes the RF PA Mid device 10, the second switching unit 20, the RF transceiver 30, and the plurality of antennas, and may be configured to support the SRS function. Meanwhile, the RF transceiving system may also be able to realize a MIMO function in a corresponding frequency band.

Based on multiple RF PA Mid devices 10 of the quad receiving channels shown in FIGS. 2, 4, 6, 8, 10, and 13, a RF transceiving system is also provided in some embodiments of the present disclosure. FIG. 16 is a second structural block view of the RF transceiving system according to an embodiment of the present disclosure. As shown in FIG. 16, the RF transceiving system includes the RF PA Mid device 10 described above, the second switching unit 20, the RF transceiver 30, and the plurality of antennas. The plurality of antennas is configured to receive and transmit the RF signals. In the embodiment shown in FIG. 16, the RF transceiving system includes four antennas, i.e., the first antenna ANT0, the second antenna ANT1, a third antenna ANT2, and a fourth antenna ANT3, respectively. The plurality of first terminals of the second switching unit 20 is one-to-one connected to the plurality of antenna ports, respectively, and the plurality of second terminals of the second switching unit 20 is one-to-one connected to the plurality of antennas, respectively. In an embodiment, by controlling the switching state of the second switching unit 20, the receiving channel and the transmission path of the transmitting signal on which each of the first antenna ANT0, the second antenna ANT1, the third antenna ANT2, and the fourth antenna ANT3 is arranged may be controlled to be conducted, respectively. The RF transceiver 30 is connected to the transmitting port RFIN and the plurality of the receiving ports of the RF PA Mid device 10.

Based on the RF transceiving system as shown in FIG. 16, the operating principle of the RF transceiving system is analyzed in detail.

Control for the SRS rotating transmitting: Table 2 shows the detailed SRS path configuration of the RF PA Mid device 10 in this embodiment. Combined with Table 2, the transmitting signal is outputted from the port TX1 HB2 of the RF transceiver 30, enters into the RF PA Mid device 10 through the RFIN port, and is transmitted to the SPDT switch 110 after being amplified by the power amplifier 310. The SPDT switch 110 switches to the single port, the transmitting signal passes through a filter to be transmitted to the first antenna port ANT1 of the RF PA Mid device 10, and passes through the Path1 to the second switching unit 20. The second switching unit 20 switches to a contact 5, the transmitting signal thereby passes through a path5 to be transmitted to and outputted by the first antenna ANT0, and the SRS function is achieved. The second switching unit 20 switches to a contact 6, and the transmitting signal thereby passes through a path6 to be transmitted to and outputted by the second antenna ANT1. The second switching unit 20 switches to a contact 7, and the transmitting signal thereby passes through a path7 to be transmitted to and outputted by the third antenna port ANT3. The second switching unit 20 switches to a contact 8, and the transmitting signal thereby passes through a path8 to be transmitted to and outputted by the fourth antenna port ANT4.

**Table 2 detailed SRS path configuration table**

| | |
|---|---|
| Channel0 | Path1->Path5 |
| Channel1 | Path1->Path6 |
| Channel2 | Path1->Path7 |
| Channel3 | Path1->Path8 |

Control for transmission: the transmitting signal is outputted from the port TX1 HB2 of the RF transceiver 30, enters into the RF PA Mid device 10 through the RFIN port, and is transmitted to the SPDT switch 110 after being amplified by the power amplifier 310. The SPDT switch 110 switches to the single port, the transmitting signal passes through the filter to be transmitted to the first antenna port ANT1 of the RF PA Mid device 10, and passes through the Path1 to the second switching unit 20. The second switching unit 20 switches to the contact 5, and the transmitting signal thereby passes through the path5 to be eventually transmitted to and outputted by the first antenna ANT0.

Control for the primary reception: the receiving signal enters from the first antenna ANT0, and passes through the Path5 to the second switching unit 20. The second switching unit 20 switches to the Path1, the receiving signal is thereby transmitted to the first antenna port ANT1 of the RF PA Mid device 10, and passes through the filter 411 to the SPDT switch 110. The SPDT switch 110 switches to the PRX path, the receiving signal is transmitted to the first primary receiving port PRX1OUT after being amplified by the first low noise amplifier 211, and passes through the port SDR PRX7 into the RF transceiver 30.

Control for the diversity reception: the receiving signal enters from the second antenna ANT1, and passes through the Path6 to the second switching unit 20. The second switching unit 20 switches to the Path2, the receiving signal is thereby transmitted to the second antenna port ANT2 of the RF PA Mid device 10, passes through the second filter 412 and the second low noise amplifier 212 to the first diversity receiving port DRX1OUT, and passes through the port SDR DRX7 into the RF transceiver 30.

MIMO control for the primary reception: the receiving signal enters from the third antenna ANT2, and passes through the Path7 to the second switching unit 20. The second switching unit 20 switches to the Path3, the receiving signal is thereby transmitted to the third antenna port ANT3 of the RF PA Mid device 10, passes through the third filter 413 and the third low noise amplifier 213 to the second primary receiving port PRX2OUT, and passes through a port SDR PRX5 into the RF transceiver 30.

MIMO control for the diversity reception: the receiving signal enters from the fourth antenna ANT3, and passes through the Path8 to the second switching unit 20. The second switching unit 20 switches to the Path4, the receiving signal is thereby transmitted to the fourth antenna port ANT4 of the RF PA Mid device 10, passes through the fourth filter 411 and the fourth low noise amplifier 214 to the second diversity receiving port DRX2OUT, and passes through the port SDR DRX5 into the RF transceiver 30.

The RF transceiving system in this embodiment includes the RF PA Mid device 10, the second switching unit 20, the RF transceiver 30, and the plurality of antennas, and may be configured to support the SRS function. Meanwhile, the RF transceiving system may also be able to realize the MIMO function in the corresponding frequency band.

In an embodiment, the plurality of filtering units 410 have the same number with and respectively one-to-one connected to the plurality of first terminals of the first switching unit 100. One of the plurality of filtering units 410 is connected to the output terminal of the transmitting circuit 300, and the rest of the plurality of filtering units 410 are one-to-one connected to the rest of the low noise amplifiers, respectively. FIG. 17 is a seventh structural block view of the RF PA Mid device 10 of the quad receiving channels according to an embodiment of the present disclosure. As shown in FIG. 17, in this embodiment, the first switching unit 100 includes the plurality of first terminals and a plurality of second terminals. One of the plurality of first terminals of the first switching unit 100 is connected to the output terminal of the transmitting circuit 300, the rest of the plurality of first terminals of the first switching unit 100 are one-to-one connected to input terminals of the multiple low noise amplifiers, respectively, and the plurality of the second terminals of the first switching unit 100 is one-to-one connected to the plurality of antenna ports, respectively.

In an embodiment, corresponding to four antenna ports, the first switching unit 100 is configured to be a 4P5T switch 140 in this embodiment. A contact 1 of the 4P5T switch 140 is connected to the first filter 411, a contact 2 of the 4P5T switch 140 is connected to the second filter 412, a contact 3 of the 4P5T switch 140 is connected to the third filter 413, a contact 4 of the 4P5T switch 140 is connected to the fourth filter 414, a contact 5 of the 4P5T switch 140 is connected to the fifth filter 415, a contact 6 of the 4P5T switch 140 is connected to the first antenna port ANT1, a contact 7 of the 4P5T switch 140 is connected to the second antenna port ANT2, a contact 8 of the 4P5T switch 140 is connected to the third antenna port ANT3, and a contact 9 of the 4P5T switch 140 is connected to the fourth antenna port ANT4. In addition, the other terminal of the first filter 411 is connected to the input terminal of the first low noise amplifier 211, the other terminal of the second filter 412 is connected to the input terminal of the second low noise amplifier 212, the other terminal of the third filter 413 is connected to the input terminal of the third low noise amplifier 213, the other terminal of the fourth filter 414 is connected to the input terminal of the fourth low noise amplifier 214, and the other terminal of the fifth filter 415 is connected to the output terminal of the power amplifier 310. The output terminal of the first low noise amplifier 211 is connected to the first primary receiving port PRX1OUT, the output terminal of the second low noise amplifier 212 is connected to the first diversity receiving port DRX 1 OUT, the output terminal of the third low noise amplifier 213 is connected to the second primary receiving port PRX2OUT, the output terminal of the fourth low noise amplifier 214 is connected to the second diversity receiving port DRX2OUT, and the input terminal of the power amplifier 310 is connected to the transmitting port RFIN, thus transmitting paths and receiving paths of the RF PA Mid device 10 are formed therein.

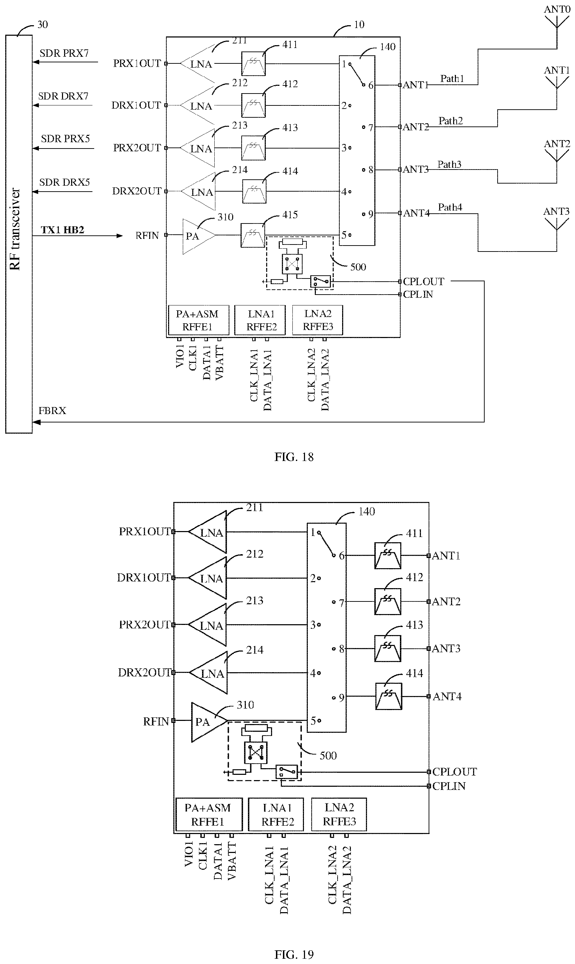

Based on the above-described RF PA Mid device 10 of quad receiving channels shown in FIG. 17, a RF transceiving system is also provided in some embodiments of the present disclosure. FIG. 18 is a third structural block view of the RF transceiving system according to an embodiment of the present disclosure. As shown in FIG. 18, the RF transceiving system includes the RF PA Mid device 10 described above, the RF transceiver 30, and the plurality of antennas. The plurality of antennas is configured to receive and transmit the RF signals. In the embodiment shown in FIG. 18, the RF transceiving system includes four antennas, i.e., the first antenna ANT0, the second antenna ANT1, the third antenna ANT2, and the fourth antenna ANT3, respectively. The RF transceiver 30 is connected to the transmitting port RFIN and the plurality of the receiving ports of the RF PA Mid device 10, respectively. Combining FIG. 16 with FIG. 18, it can be appreciated that, in this embodiment, by arranging the 4P5T switch 140 and controlling a switching state of the 4P5T switch 140, the receiving channel and the transmission path of the transmitting signal on which each of the first antenna ANT0, the second antenna ANT1, the third antenna ANT2, and the fourth antenna ANT3 is arranged may be controlled to be conducted, respectively, without a requirement for arranging the second switching unit 20 in the embodiment depicted in accordance with FIG. 16. That is, based on the RF PA Mid device 10 in the embodiment depicted in accordance with FIG. 17, the entire integration level of the RF transceiving system may be further improved, and thereby the RF transceiving system having a smaller volume may be provided.

Based on the RF transceiving system as shown in FIG. 18, the operating principle of the RF transceiving system is analyzed in detail.

Control for the SRS rotating transmitting: Table 3 shows the detailed SRS path configuration of the RF PA Mid device 10 in this embodiment. Combined with Table 3, the transmitting signal is outputted from the port TX1 HB2 of the RF transceiver 30, enters into the RF PA Mid device 10 through the RFIN port, and passes through the fifth filter 415 after being amplified by the power amplifier 310 to be transmitted to the 4P5T switch 140. The 4P5T switch 140 switches to the contact 6, the transmitting signal is thereby transmitted to the first antenna port ANT1, passes through the path1 to be transmitted to and outputted by the first antenna ANT0, and the SRS function is achieved. The 4P5T switch 140 switches to the contact 7, the transmitting signal is thereby transmitted to the second antenna port ANT2, and passes through the path2 to be transmitted to and outputted by the second antenna ANT1. The 4P5T switch 140 switches to the contact 8, the transmitting signal is thereby transmitted to the third antenna port ANT3, and passes through the path3 to be transmitted to and outputted by the third antenna ANT2. The 4P5T switch 140 switches to the contact 9, the transmitting signal is thereby transmitted to the fourth antenna port ANT4, and passes through the path4 to be transmitted to and outputted by the fourth antenna ANT3.

**Table 3 detailed SRS path configuration table**

| | |
|---|---|
| Channel0 | Path1 |
| Channel1 | Path2 |
| Channel2 | Path3 |
| Channel3 | Path4 |

Control for transmission: the transmitting signal is outputted from the port TX1 HB2 of the RF transceiver 30, enters into the RF PA Mid device 10 through the RFIN port, and passes through the fifth filter 415 after being amplified by the power amplifier 310 to be transmitted to the 4P5T switch 140. The 4P5T switch 140 switches to the contact 9, the transmitting signal is thereby transmitted to the fourth antenna port ANT4, and passes through the path4 to be transmitted to and outputted by the fourth antenna ANT3.

Control for the primary reception: the receiving signal enters from the first antenna ANT0, and passes through the Path1 to be transmitted to the first antenna port ANT1 of the RF PA Mid device 10. The 4P5T switch 140 switches to the contact 1, the receiving signal is transmitted to the first primary receiving port PRX1OUT after passing through the first filter 411 and being amplified by the first low noise amplifier 211, and passes through the port SDR PRX7 into the RF transceiver 30.

Control for the diversity reception: the receiving signal enters from the second antenna ANT1, and passes through the Path2 to the second antenna port ANT2 of the RF PA Mid device 10. The 4P5T switch 140 switches to the contact 2, the receiving signal is transmitted to the first diversity receiving port DRX1OUT after passing through the second filter 412 and being amplified by the second low noise amplifier 212, and passes through the port SDR DRX7 into the RF transceiver 30.

MIMO control for the primary reception: the receiving signal enters from the third antenna ANT2, and passes through the Path3 to the third antenna port ANT3 of the RF PA Mid device 10. The 4P5T switch 140 switches to the contact 3, the receiving signal is transmitted to the second primary receiving port PRX2OUT after passing through the third filter 413 and being amplified by the third low noise amplifier 213, and passes through the port SDR PRX5 into the RF transceiver 30.

MIMO control for the diversity reception: the receiving signal enters from the fourth antenna ANT3, and passes through the Path4 to the fourth antenna port ANT4 of the RF PA Mid device 10. The 4P5T switch 140 switches to the contact 4, the receiving signal is transmitted to the second diversity receiving port DRX2OUT after passing through the fourth filter 414 and being amplified by the fourth low noise amplifier 214, and passes through the port SDR DRX5 into the RF transceiver 30.

The RF transceiving system in this embodiment includes the RF PAMid device 10, the RF transceiver 30, and the plurality of antennas, and may be configured to support the SRS function. Meanwhile, the RF transceiving system may also be able to realize the MIMO function in the corresponding frequency band. Moreover, based on the RF PAMid device 10 in the embodiment depicted in accordance with FIG. 17, the RF transceiving system in this embodiment has a higher integration level and a simpler control logic.

In an embodiment, the plurality of filtering units 410 have the same number with and respectively one-to-one connected to the plurality of second terminals of the first switching unit 100, and the plurality of filtering units 410 are one-to-one connected to the plurality of antenna ports, respectively. FIG. 19 is an eighth structural block view of the RF PA Mid device 10 of the quad receiving channels according to an embodiment of the present disclosure. As shown in FIG. 19, in this embodiment, corresponding to four antenna ports, the first switching unit 100 is configured to be the 4P5T switch 140 in this embodiment. The contact 1 of the 4P5T switch 140 is connected to the input terminal of the first low noise amplifier 211, the contact 2 of the 4P5T switch 140 is connected to the input terminal of the second low noise amplifier 212, the contact 3 of the 4P5T switch 140 is connected to the input terminal of the third low noise amplifier 213, the contact 4 of the 4P5T switch 140 is connected to the input terminal of the fourth low noise amplifier 214, and the contact 5 of the 4P5T switch 140 is connected to the output terminal of the power amplifier 310. The contact 6 of the 4P5T switch 140 is connected to the first filter 411, the contact 7 of the 4P5T switch 140 is connected to the second filter 412, the contact 8 of the 4P5T switch 140 is connected to the third filter 413, and the contact 9 of the 4P5T switch 140 is connected to the fourth filter 414. In addition, the other terminal of the first filter 411 is connected to the first antenna port ANT1, the other terminal of the second filter 412 is connected to the second antenna port ANT2, the other terminal of the third filter 413 is connected to the third antenna port ANT3, and the other terminal of the fourth filter 414 is connected to the fourth antenna port ANT4. The output terminal of the first low noise amplifier 211 is connected to the first primary receiving port PRX1OUT, the output terminal of the second low noise amplifier 212 is connected to the first diversity receiving port DRX1OUT, the output terminal of the third low noise amplifier 213 is connected to the second primary receiving port PRX2OUT, the output terminal of the fourth low noise amplifier 214 is connected to the second diversity receiving port DRX2OUT, and the input terminal of the power amplifier 310 is connected to the transmitting port RFIN, thus the transmitting paths and the receiving paths of the RF PA Mid device 10 are formed therein.

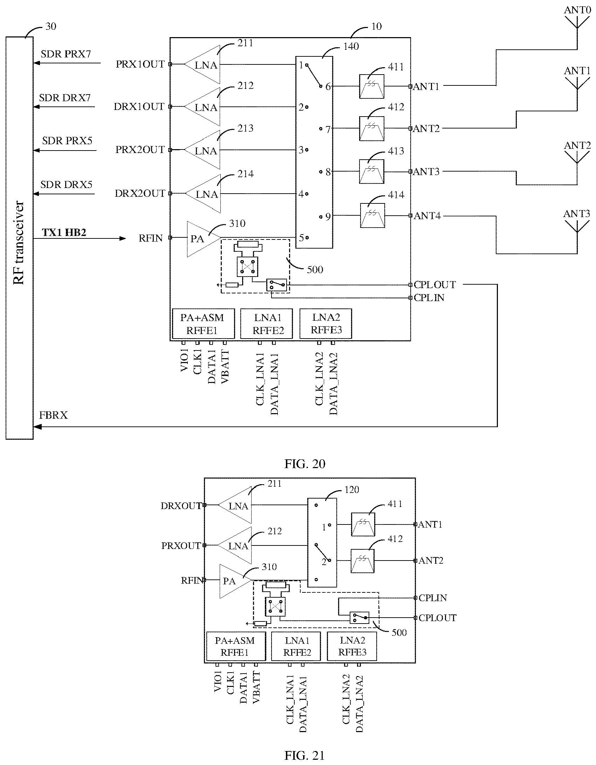

Based on the above-described RF PA Mid device 10 of quad receiving channels shown in FIG. 19, a RF transceiving system is also provided in some embodiments of the present disclosure. FIG. 20 is a fourth structural block view of the RF transceiving system according to an embodiment of the present disclosure. As shown in FIG. 20, the RF transceiving system includes the RF PA Mid device 10 described above, the RF transceiver 30, and the plurality of antennas. The plurality of antennas is configured to receive and transmit the RF signals. In the embodiment shown in FIG. 20, the RF transceiving system includes four antennas, i.e., the first antenna ANT0, the second antenna ANT1, the third antenna ANT2, and the fourth antenna ANT3, respectively. The RF transceiver 30 is connected to the transmitting port RFIN and the plurality of the receiving ports of the RF PA Mid device 10, respectively. It can be understood that, during performing the SRS rotating transmitting, signals may be transmitted in turns from the first antenna port ANT1 to the fourth antenna port ANT4, and transmitting signals are directly output to the antennas from ANT ports of a device, respectively. In an actual test, it was found that an outputted signal contains a secondary harmonic interference signal of 5G NR. Combined FIG. 18 with FIG. 20, it may be appreciated that, in this embodiment, by arranging a bandpass filter on the transmitting paths and the receiving paths inside the device, an area of an external PCB may be not occupied and the problem of secondary harmonic interference may be solved. The operating principle of the RF transceiving system in this embodiment is similar to that of the RF transceiving system in the embodiment depicted in accordance with FIG. 18, which may refer to the related embodiment described above and is thereby not repeated herein.

FIG. 21 is a seventh structural block view of the RF PA Mid device 10 of the dual receiving channels according to an embodiment of the present disclosure. As shown in FIG. 21, in this embodiment, the first switching unit 100 includes the plurality of first terminals and the plurality of second terminals. One of the plurality of first terminals of the first switching unit 100 is connected to the output terminal of the transmitting circuit 300, the rest of the plurality of first terminals of the first switching unit 100 are one-to-one connected to the input terminals of the multiple low noise amplifiers, respectively, and the plurality of the second terminals of the first switching unit 100 is one-to-one connected to the plurality of antenna ports, respectively.

In an embodiment, corresponding to two antenna ports, the first switching unit 100 is configured to be a 2P3T switch in this embodiment. A contact 1 of the 2P3T switch is connected to the input terminal of the first low noise amplifier 211, a contact 2 of the 2P3T switch is connected to the input terminal of the second low noise amplifier 212, and a contact 3 of the 2P3T switch is connected to the output terminal of the power amplifier 310. A contact 4 of the 2P3T switch is connected to the first filter 411, and the contact 4 of the 2P3T switch is connected to the second filter 412. In addition, the other terminal of the first filter 411 is connected to the first antenna port ANT1, and the other terminal of the second filter 412 is connected to the second antenna port ANT2. The output terminal of the first low noise amplifier 211 is connected to the diversity receiving port DRXOUT, the output terminal of the second low noise amplifier 212 is connected to the primary receiving port PRXOUT, and the input terminal of the power amplifier 310 is connected to the transmitting port RFIN, thus the transmitting paths and the receiving paths of the RF PA Mid device 10 are formed therein.

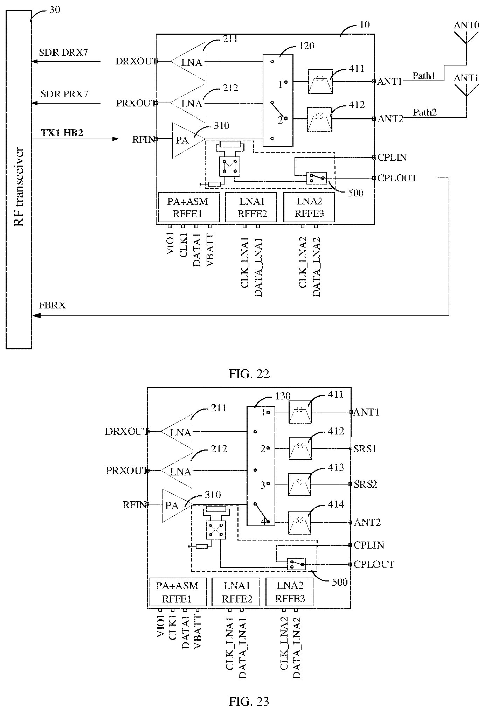

Based on the above-described RF PA Mid device 10 of the dual receiving channels shown in FIG. 21, a RF transceiving system is also provided in some embodiments of the present disclosure. FIG. 22 is a fifth structural block view of the RF transceiving system according to an embodiment of the present disclosure. As shown in FIG. 22, the RF transceiving system includes the RF PA Mid device 10 described above, the RF transceiver 30, and the plurality of antennas. The plurality of antennas is configured to receive and transmit the RF signals. In the embodiment shown in FIG. 22, the RF transceiving system includes two antennas, i.e., the first antenna ANT0 and the second antenna ANT1, respectively. The RF transceiver 30 is connected to the transmitting port RFIN and the plurality of the receiving ports of the RF PA Mid device 10, respectively. Combining FIG. 15 with FIG. 22, it can be appreciated that, in this embodiment, by arranging the 2P3T switch and controlling a switching state of the 2P3T switch, the receiving channel and the transmission path of the transmitting signal on which each of the first antenna ANT0 and the second antenna ANT1 is arranged may be controlled to be conducted, respectively, without the requirement for arranging the second switching unit 20 in the embodiment depicted in accordance with FIG. 15. That is, based on the RF PA Mid device 10 in the embodiment depicted in accordance with FIG. 21, the entire integration level of the RF transceiving system may be further improved, and thereby the RF transceiving system having the smaller volume may be provided.

Based on the RF transceiving system as shown in FIG. 22, the operating principle of the RF transceiving system is analyzed in detail.

Control for SRS rotating transmitting: Table 4 shows the detailed SRS path configuration of the RF PA Mid device 10 in this embodiment. Combined with Table 4, the transmitting signal is outputted from a port TX1 HB2 of the RF transceiver 30, enters into the RF PA Mid device 10 through the RFIN port, and is transmitted to a single port of a DP3T switch 120 after being amplified by the power amplifier 310. The DP3T switch 120 switches to a contact 1, the transmitting signal thereby passes through the filter 411 to be transmitted to the first antenna port ANT1, passes through the Path1 to transmitted to and outputted by the first antenna ANT0, and the SRS function is achieved. The DP3T switch 120 switches to a contact 2, the transmitting signal thereby passes through the filter 412 to be transmitted to the second antenna port ANT2, passes through the Path2 to transmitted to and outputted by the second antenna ANT1, and the SRS function is achieved.

**Table 4 detailed SRS path configuration table**

| | |
|---|---|
| Channel0 | Path1 |
| Channel1 | Path2 |

Control for transmission: the transmitting signal is outputted from the port TX1 HB2 of the RF transceiver 30, enters into the RF PA Mid device 10 through the RFIN port, and is transmitted to the single port of the DP3T switch 120 after being amplified by the power amplifier 310. The DP3T switch 120 switches to the contact 1, the transmitting signal thereby passes through the filter 411 to be transmitted to the first antenna port ANT1, passes through the Path1 to transmitted to and outputted by the first antenna ANT0.

Control for primary reception: the receiving signal enters from the first antenna ANT0, and passes through the Path1 to the first antenna port ANT1 of the RF PA Mid device 10, passes through the first filter 411 to the DP3T switch 120. The DP3T switch 120 switches to a PRX receiving path, the receiving signal is thereby transmitted to the PRXOUT port, and passes through the port SDR PRX7 into the RF transceiver 30.

Control for diversity reception: the receiving signal enters from the second antenna ANT1, and passes through the Path21 to the second antenna port ANT1 of the RF PA Mid device 10, passes through the second filter 412 to the DP3T switch 120. The DP3T switch 120 switches to a DRX receiving path, the receiving signal is thereby transmitted to the DRXOUT port, and passes through the port SDR DRX7 into the RF transceiver 30

Similar to the embodiment depicted in accordance with FIG. 20, in this embodiment, by arranging the bandpass filter on the transmitting paths and the receiving paths inside the device, the area of the external PCB may be not occupied. That is, both the RF transceiving system having a small volume and a scheme of solving the problem of the secondary harmonic interference are provided. In this way, an accuracy of the signals of the RF transceiving system may be effectively improved.

In an embodiment, the RF PAMid device 10 is configured with two antenna ports, and is also configured with two rotating transmitting ports configured to be connected to the antennas. The rotating transmitting ports SRS may be configured to receive the RF signals transmitted by the RF PA Mid device 10. Through the rotating transmitting port SRS, received RF signals may be transmitted out through the antenna ports of the RF PA Mid device 10, to support the control of the transmission for the RF signals. The first switching unit 100 includes three first terminals and four second terminals, two of the three first terminals of the first switching unit 100 are one-to-one connected to the input terminals of two of the plurality of low noise amplifiers, respectively, the rest one of the three first terminals of the first switching unit 100 is connected to the output terminal of the transmitting circuit 300, and the four second terminals of the first switching unit 100 are one-to-one connected to the two antenna ports and the two rotating transmitting ports, respectively.

FIG. 23 is an eighth structural block view of the RF PA Mid device 10 of the dual receiving channels according to an embodiment of the present disclosure. As shown in FIG. 23, in this embodiment, the first switching unit 100 is configured to be a 4P3T switch 130. A first one of the three first terminals of the 4P3T switch 130 is connected to the input terminal of the first low noise amplifier 211, a second one of the three first terminals of the 4P3T switch 130 is connected to the input terminal of the second low noise amplifier 212, and a third one of the three first terminals of the 4P3T switch 130 is connected to the output terminal of the power amplifier 310. A contact 1 of the 4P3T switch 130 is connected to the first filter 411, a contact 2 of the 4P3T switch 130 is connected to the second filter 412, a contact 3 of the 4P3T switch 130 is connected to the third filter 413, and a contact 4 of the 4P3T switch 130 is connected to the fourth filter 414. In addition, the other terminal of the first filter 411 is connected to the first antenna port ANT1, the other terminal of the second filter 412 is connected to the second antenna port ANT2, the other terminal of the third filter 413 is connected to the third antenna port ANT3, and the other terminal of the fourth filter 414 is connected to the fourth antenna port ANT4. The output terminal of the first low noise amplifier 211 is connected to the diversity receiving port DRXOUT, the output terminal of the second low noise amplifier 212 is connected to the primary receiving port PRXOUT, and the input terminal of the power amplifier 310 is connected to the transmitting port RFIN, thus the transmitting paths and the receiving paths of the RF PA Mid device 10 are formed therein.

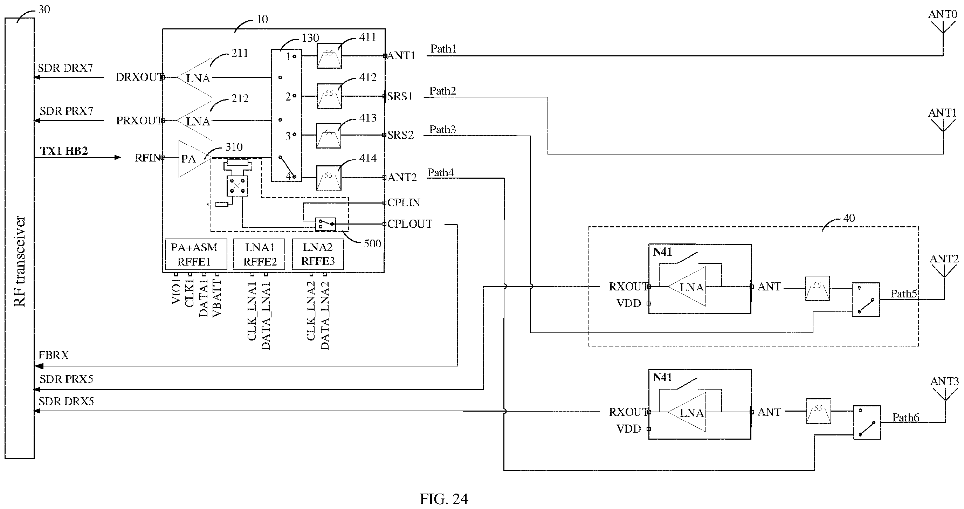

Based on the above-described RF PA Mid device 10 of the dual receiving channels shown in FIG. 23, a RF transceiving system is also provided in some embodiments of the present disclosure. FIG. 24 is a sixth structural block view of the RF transceiving system according to an embodiment of the present disclosure. As shown in FIG. 24, the RF transceiving system includes the RF PA Mid device 10 described above, the RF transceiver 30, a plurality of receiving modules 40, and the plurality of antennas. In this embodiment, the receiving modules 40 correspond to a frequency band N41, and the RF transceiving system is applied to the frequency band N41. In this embodiment, the RF PAMid device 10 includes two receiving modules 40. Each of the plurality of receiving modules 40 is one-to-one connected to a corresponding one of the two antenna ports or a corresponding one of the two rotating transmitting ports of the RF PA Mid device 10, respectively. The plurality of receiving modules is configured to increase the number of receiving channels for the RF signals. The RF transceiving system includes four antennas, i.e., the first antenna ANT0, the second antenna ANT1, the third antenna ANT2, and the fourth antenna ANT3, respectively. The four antennas are configured to transmit and receive the RF signals. Each of two of the plurality of antennas is one-to-one connected to the other one of the two antenna ports or the other one of the two rotating transmitting ports of the RF PA Mid device 10, respectively, and the rest of the antennas are one-to-one connected to the plurality of receiving modules 40, respectively. The rest of the plurality of antennas are one-to-one connected to the plurality of receiving modules, respectively The RF transceiver 30 is connected to the transmitting port RFIN, the plurality of the receiving ports of the RF PA Mid device 10, and the plurality of receiving modules 40, respectively.

In the embodiment depicted in accordance with FIG. 24, by arranging the 4P3T switch and two receiving modules 40, the receiving channel and the transmission path of the transmitting signal on which each of the first antenna ANT0, the second antenna ANT1, the third antenna ANT2, and the fourth antenna ANT3 is arranged may be controlled to be conducted, respectively. That is, based on the RF PA Mid device 10 in the embodiment depicted in accordance with FIG. 23, a 4×4MIMO RF transceiving system may be achieved.

Based on the RF transceiving system as shown in FIG. 24, the operating principle of the RF transceiving system is analyzed in detail.

Control for the SRS rotating transmitting: Table 5 shows the detailed SRS path configuration of the RF PA Mid device 10 in this embodiment. Combined with Table 5, the transmitting signal is outputted from the port TX1 HB2 of the RF transceiver 30, enters into the RF PA Mid device 10 through the RFIN port, and is transmitted to the 4P3T switch 130 after being amplified by the power amplifier 310. The 4P3T switch 130 switches to the contact 1, the transmitting signal thereby passes through the first filter 411 to be transmitted to the first antenna port ANT1 of the RF PA Mid device 10, passes through the path1 to be transmitted to and outputted by the first antenna ANT0, and the SRS function is achieved. The 4P3T switch 130 switches to the contact 2, the transmitting signal thereby passes through the second filter 412 to be transmitted to a port SRS1 of the RF PA Mid device 10, passes through the path2 to be transmitted to and outputted by the second antenna ANT1, and the SRS function is achieved. The 4P3T switch 130 switches to the contact 3, the transmitting signal thereby passes through the third filter 413 to be transmitted to a port SRS2 of the RF PA Mid device 10, passes through the path3 to a SPDT switch 110#1. The SPDT switch 110#1 switches to the path5, the transmitted signal passes through the path5 to be transmitted to and outputted by the third antenna ANT2, and the SRS function is achieved. The 4P3T switch 130 switches to the contact 4, the transmitting signal thereby passes through the fourth filter 412 to be transmitted to the second antenna port ANT2, passes through the path4 to another SPDT switch. The SPDT switch switches to the path6, the transmitted signal passes through the path6 to be transmitted to and outputted by the fourth antenna ANT3, and the SRS function is achieved.

**Table 5 detailed SRS path configuration table**

| | |
|---|---|
| Channel0 | Path1 |
| Channel1 | Path2 |
| Channel2 | Path3->Path5 |
| Channel3 | Path4->Path6 |

Control for transmission: the transmitting signal is outputted from the port TX1 HB2 of the RF transceiver 30, enters into the RF PA Mid device 10 through the RFIN port, and is transmitted to the 4P3T switch 130 after being amplified by the power amplifier 310. The 4P3T switch 130 switches to the contact 1, the transmitting signal thereby passes through the first filter 411 to be transmitted to the first antenna port ANT1 of the RF PA Mid device 10, and passes through the path1 to be transmitted to and outputted by the first antenna ANT0.

Control for the primary reception: the receiving signal enters from the first antenna ANT0, passes through the Path1 to be transmitted to the first antenna port ANT1 of the RF PA Mid device 10, passes through the first filter 411 to the 4P3T switch 130. The 4P3T switch 130 switches to the PRX receiving path, the receiving signal is thereby transmitted to the PRXOUT port, and passes through the port SDR PRX7 into the RF transceiver 30.

Control for the diversity reception: the receiving signal enters from the second antenna ANT1, and passes through the Path2 to a first rotating transmitting port SRS1 of the RF PA Mid device 10. The 4P3T switch 130 switches to the contact 2, the receiving signal is transmitted to the diversity receiving port DRXOUT after passing through the second filter 412 and being amplified by the second low noise amplifier 212, and passes through the port SDR DRX7 into the RF transceiver 30.

MIMO control for the primary reception: the receiving signal enters from the third antenna ANT2, passes through the Path5, and passes through the port SDR PRX5 into the RF transceiver 30.

MIMO control for the diversity reception: the receiving signal enters from the fourth antenna ANT3, and passes through the Path6, and passes through another port SDR DRX5 into the RF transceiver 30.

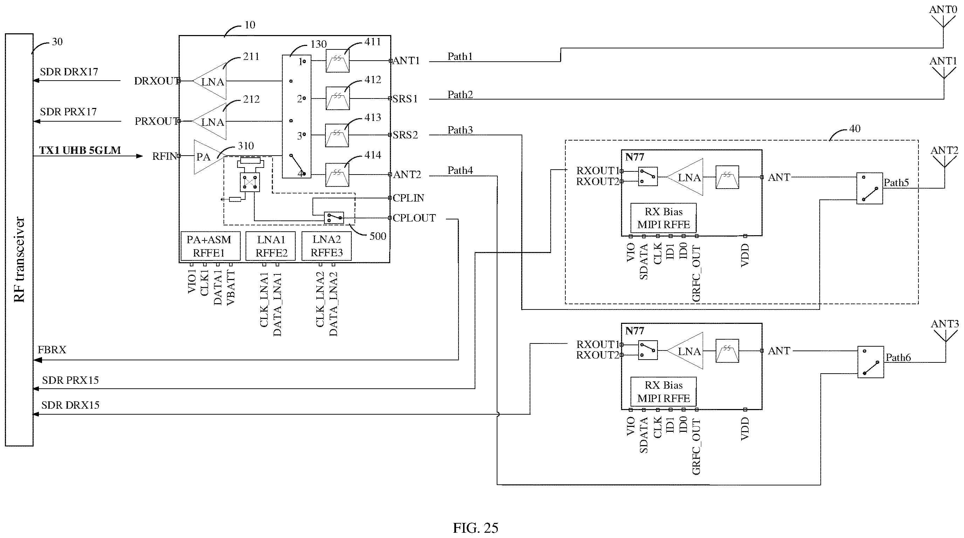

Based on the above-described RF PA Mid device 10 of the dual receiving channels shown in FIG. 23, a RF transceiving system is also provided in some embodiments of the present disclosure. FIG. 25 is a seventh structural block view of the RF transceiving system according to an embodiment of the present disclosure. As shown in FIG. 25, the RF transceiving system includes the RF PA Mid device 10 described above, the RF transceiver 30, the plurality of receiving modules 40, and the plurality of antennas. In this embodiment, the receiving modules 40 correspond to a frequency band N77 and a frequency band N79, and the RF transceiving system is applied to or performed in the frequency band N77 or the frequency band N79. The operating principle of the RF transceiving system in this embodiment is similar to that of the RF transceiving system in the embodiment depicted in accordance with FIG. 24, which is not repeated herein.

A communication device is also provided in some embodiments of the present disclosure. The communication device is provided with the RF transceiving system according to any embodiment described above. By providing the RF transceiving system on the communication device, the integration level of the communication device may be improved, such that an overall size of the communication device is reduced. That is, the communication device having a smaller volume and a lower weight is provided.

Each technical feature of the embodiments described above may be combined arbitrarily. For the sake of concise description, not all possible combinations of each technical feature of the embodiments described above are described herein. However, as long as a combination of these technical features has no contradiction, it should be considered to fall into the scope of the description.

The embodiments described above are simply present some implementations of the embodiments of the present disclosure, which are more specific and detailed but not supposed to be thereby construed as limitations to the scope of the present disclosure. It should be noted that, for a person of ordinary skill in the art, a number of deformations and improvements may be made without departing from ideas of the embodiments of the present disclosure, which all belong to the scope of the embodiments of the present disclosure. Therefore, the patent scope of the embodiments of the present disclosure shall be subject to the appended claims.

## Claims

1. A radio frequency PA Mid device, configured with:
a transmitting port;
a plurality of receiving ports, the plurality of receiving ports and the transmitting port being configured to be connected to a radio frequency transceiver; and
a plurality of antenna ports, configured to be connected to antennas;
wherein the radio frequency PA Mid device comprises:
a first switching unit, comprising:
a plurality of first terminals; and
at least one second terminal, one-to-one connected to the plurality of antenna ports, respectively;
a plurality of receiving circuits, comprising:
a plurality of low noise amplifiers, wherein each of the plurality of receiving circuits comprises a low noise amplifier , an input terminal of at least one of the plurality of low noise amplifiers is connected to one of the plurality of first terminals of the first switching unit, input terminals of the rest of the plurality of low noise amplifiers are one-to-one connected to the rest of the plurality of antenna ports, respectively, and the plurality of receiving circuits is configured to support multi-channel reception for radio frequency signals; and
a transmitting circuit, wherein an input terminal of the transmitting circuit is connected to the transmitting port, an output terminal of the transmitting circuit is connected to another one of the plurality of first terminals of the first switching unit, and the transmitting circuit is configured to receive a radio frequency signal and amplify a received radio frequency signal.

2. The radio frequency PA Mid device according to claim 1, further comprising:
a plurality of filtering units, one-to-one corresponds to the plurality of low noise amplifiers, wherein each of the plurality of filtering units is arranged on a receiving channel of a corresponding one of the plurality of low noise amplifiers, and the plurality of filtering units are configured to receive the radio frequency signals from the plurality of antenna ports and filter received radio frequency signals.

3. The radio frequency PA Mid device according to claim 2, wherein first terminals of the plurality of filtering units are one-to-one connected to input terminals of the plurality of low noise amplifiers, respectively; the first switching unit comprises two first terminals and one second terminal, one of the two first terminals of the first switching unit is one-to-one connected to the output terminal of the transmitting circuit, the other one of the two first terminals of the first switching unit is one-to-one connected to a second terminal of one of the plurality of filtering units, respectively, and the second terminal of the first switching unit is connected to one of the plurality of antenna ports; and the rest of the plurality of filtering units are one-to-one connected to the rest of the plurality of antenna ports, respectively.

4. The radio frequency PA Mid device according to claim 3, further comprising:
a filtering unit, arranged corresponding to the transmitting circuit;
wherein the transmitting circuit is connected to the one of the two first terminals of the first switching unit via the filtering unit.

5. The radio frequency PA Mid device according to claim 4, wherein the transmitting circuit comprises a power amplifier.

6. The radio frequency PA Mid device according to claim 5, wherein the power amplifier is connected to the one of the two first terminals of the first switching unit via the filtering unit.

7. The radio frequency PA Mid device according to claim 5, further comprising:
a first control unit, wherein the first control unit is configured to control each of switching units to be on/off and an operating state of the power amplifier.

8. The radio frequency PA Mid device according to claim 1, wherein the first switching unit comprises two first terminals and one second terminal, the two first terminals of the first switching unit are one-to-one connected to the output terminal of the transmitting circuit and an input terminal of one of the plurality of low noise amplifiers, respectively, and the radio frequency PA Mid device further comprises:
a plurality of filtering units, wherein the second terminal of the first switching unit is connected to one of the plurality of antenna ports via one of the plurality of filtering units, and each of the rest of the plurality of low noise amplifiers is connected to a corresponding one of the plurality of antenna ports via a corresponding one of the plurality of filtering units.

9. The radio frequency PA Mid device according to claim 2, wherein the first switching unit comprises:
the plurality of first terminals; and
a plurality of second terminals;
wherein one of the plurality of first terminals of the first switching unit is connected to the output terminal of the transmitting circuit, each of the rest of the plurality of first terminals of the first switching unit is connected to the input terminal of the corresponding one of the plurality of low noise amplifiers via one of the plurality of filtering units, and the plurality of second terminals of the first switching unit is one-to-one connected to the plurality of antenna ports, respectively.

10. The radio frequency PA Mid device according to claim 2, wherein the first switching unit comprises:
the plurality of first terminals; and
a plurality of second terminals;
wherein each of the plurality of first terminals of the first switching unit is one-to-one connected to the output terminal of the transmitting circuit or the input terminal of the corresponding one of the plurality of low noise amplifiers, respectively, and each of the plurality of second terminals of the first switching unit is one-to-one connected to a corresponding one of the plurality of antenna ports via one of the plurality of filtering units.

11. The radio frequency PA Mid device according to claim 1, configured with two antenna ports and two rotating transmitting ports configured to be connected to the antennas, the first switching unit comprising three first terminals and four second terminals, wherein two of the three first terminals of the first switching unit are one-to-one connected to input terminals of two of the plurality of low noise amplifiers, respectively, the rest one of the three first terminals of the first switching unit is connected to the output terminal of the transmitting circuit, and the four second terminals of the first switching unit are one-to-one connected to the two antenna ports and the two rotating transmitting ports, respectively.

12. The radio frequency PA Mid device according to any one of claims 1 to 11, further comprising:
a second control unit;
wherein the second control unit is connected to the plurality of low noise amplifiers and configured to adjust a gain coefficient of each of the plurality of low noise amplifiers.

13. The radio frequency PA Mid device according to any one of claims 1 to 11, further configured with a coupling output port and further comprising:
a coupling circuit, arranged on a transmitting channel between the transmitting port and a corresponding antenna port, and configured to couple the radio frequency signal transmitted on the transmitting channel, to enable a coupling signal to be outputted by a coupling terminal of the coupling circuit; wherein the coupling signal is configured to be transmitted to the coupling output port.

14. The radio frequency PA Mid device according to any one of claims 1 to 11, wherein a coupling circuit is provided with a coupling switch, the coupling switch is connected to a coupling terminal of the coupling circuit, a coupling input port, and a coupling output port, respectively, and the coupling switch is configured to alternatively output a coupling signal to the coupling output port or input coupling signals of other coupling circuits from the coupling input port.

15. The radio frequency PA Mid device according to any one of claims 1 to 11, wherein a frequency band of the radio frequency signals comprises one of N41, N77, and N79.

16. A radio frequency transceiving system, comprising:
the radio frequency PA Mid device as claimed in any one of claims 1 to 8, and 12 to 14;
a plurality of antennas, configured to receive and transmit the radio frequency signals;
a second switching unit, wherein a plurality of first terminals of the second switching unit is one-to-one connected to the plurality of antenna ports, respectively, and a plurality of second terminals of the second switching unit is one-to-one connected to the plurality of antennas, respectively; and
the radio frequency transceiver, connected to the transmitting port and the plurality of receiving ports of the radio frequency PA Mid device, respectively.

17. A radio frequency transceiving system, comprising:
the radio frequency PA Mid device as claimed in any one of claims 9 to 10, and 12 to 14;
a plurality of antennas, configured to receive and transmit the radio frequency signals, and configured to be one-to-one connected to the plurality of antenna ports of the radio frequency PA Mid device, respectively; and
the radio frequency transceiver, connected to the transmitting port and the plurality of receiving ports of the radio frequency PA Mid device, respectively.

18. A radio frequency transceiving system, comprising:
the radio frequency PA Mid device as claimed in claim 11;
a plurality of receiving modules, wherein each of the plurality of receiving modules is one-to-one connected to a corresponding one of the two antenna ports or a corresponding one of the two rotating transmitting ports of the radio frequency PA Mid device, respectively, and the plurality of receiving modules is configured to increase the number of receiving channels for the radio frequency signals;
a plurality of antennas, configured to receive and transmit the radio frequency signals, wherein each of two of the plurality of antennas is one-to-one connected to the other one of the two antenna ports or the other one of the two rotating transmitting ports of the radio frequency PA Mid device, respectively, and the rest of the plurality of antennas are one-to-one connected to the plurality of receiving modules, respectively; and
the radio frequency transceiver, connected to the transmitting port and the plurality of receiving ports of the radio frequency PA Mid device, and the plurality of receive modules, respectively.

19. A communication device, comprising the radio frequency transceiving system as claimed in any one of claims 16 to 18.

20. The communication device according to claim 19, wherein each of the plurality of antennas has one structure of:
an array antenna, a loop antenna, a patch antenna, a slit antenna, a spiral antenna, a ribbon antenna, a monopole antenna, and a dipole antenna.
